(19) Europäisches Patentamt
European Patent Office
Office européen des brevets

(11) Numéro de publication : 0 408 420 B1

(12) # FASCICULE DE BREVET EUROPEEN

(45) Date de publication du fascicule du brevet : **06.04.94 Bulletin 94/14**

(51) Int. Cl.[5] : **C08F 297/02**

(21) Numéro de dépôt : **90401894.2**

(22) Date de dépôt : **29.06.90**

(54) **Copolymères en étoile et leur procédé de fabrication.**

(30) Priorité : **10.07.89 FR 8909267**

(43) Date de publication de la demande : **16.01.91 Bulletin 91/03**

(45) Mention de la délivrance du brevet : **06.04.94 Bulletin 94/14**

(84) Etats contractants désignés : **AT BE CH DE DK ES FR GB GR IT LI LU NL SE**

(56) Documents cités :
**EP-A- 0 068 887**
**WO-A-86/00626**

(73) Titulaire : **ELF ATOCHEM S.A.**
**4 & 8, Cours Michelet La Défense 10**
**F-92800 Puteaux (FR)**

(72) Inventeur : **Teyssie, Philippe**
**85, Bois du Rognac**
**B-4121 Neuville en Condroz (BE)**
Inventeur : **Fayt, Roger**
**144 route du Condroz**
**B-4121 Neupre (BE)**
Inventeur : **Varshney, Sunil K.**
**114 avenue de Péville**
**B-4030 Liege (BE)**
Inventeur : **Jacobs, Christian**
**Chassée 6**
**B-4342 Hognoul (BE)**

(74) Mandataire : **Chaillot, Geneviève**
**Cabinet CHAILLOT 21, avenue Louise de Bettignies**
**F-92700 Colombes (FR)**

EP 0 408 420 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention porte sur des copolymères en étoile à base notamment de séquences vinylaromatiques et/ou méthacryliques et de séquences acryliques, ainsi que sur un procédé de fabrication de ces copolymères.

Les matériaux hétérophasés représentent, à l'heure actuelle, l'un des principaux centres d'intérêt de la science des polymères, et les copolymères séquencés en constituent l'une des familles les plus intéressantes. La séparation en microphases qui se produit dans ceux de ces copolymères contenant des séquences immiscibles, provoque en effet l'apparition d'intéressantes propriétés nouvelles, parfois inattendues, et qui dépendent de la morphologie particulière adoptée par les phases. Ces possibilités ont été remarquablement illustrées par la découverte et le développement industriel des élastomères thermoplastiques.

En outre, un intérêt se manifeste depuis plusieurs années pour les macromolécules qui présentent une topochimie particulière, comme les polymères en étoile. Les méthodes de polymérisation anionique en phase homogène, qui conduisent à des chaînes polymères dotées d'extrémités organo-métalliques (polymères vivants) ont été utilisées notamment pour la synthèse de macromolécules en étoile. C,est en faisant réagir des polystyrènes « vivants » monocarbanioniques sur des composés électrophiles polyfonctionnels, tels que $SiCl_4$, les trichlorométhylbenzènes ou encore le trimère du chlorure de phosphonitrile que Morton et al., J. Polymer Sci., 57, 471 (1962) et d'autres auteurs ont réussi à préparer des polymères en étoile. Par la suite, J.-G. Zilliox et al., J. Polymer Sci.: Part C, n° 22, pages 145-156 (1968) ont procédé par copolymérisation séquencée anionique, en utilisant, comme deuxième monomère, un composé divinylique, tel que le divinylbenzène, le diméthacrylate de glycol et le diméthacrylate d'hexanediol. Les macromolécules obtenues sont constituées d'un nodule réticulé, entouré et protégé par plusieurs chaînes linéaires solvatées.

Dans la demande de brevet européen n° 0 274 318, on décrit un système capable de contrôler la polymérisation anionique « vivante » de monomères acryliques ou méthacryliques, le cas échéant avec des monomères vinyliques, et notamment d'acrylates encombrés, tels que l'acrylate de tert.-butyle. Ce système est basé sur la formation d'un complexe entre la paire d'ions d'un amorceur classique, comme le sec.-butyllithium, et un ligand ou complexant ayant des caractéristiques stériques et électroniques bien adaptées. Des polyéthers cycliques (ou éthers-couronne) et des polythioéthers cycliques comptent parmi ces ligands, et permettent de polymériser rapidement et quantitativement entre autres l'acrylate de tert.-butyle d'une manière parfaitement « vivante ». Egalement, dans le brevet américain n° 4 767 824, on décrit, comme autre ligand, un sel d'un métal alcalin ou alcalino-terreux et d'un acide minéral, comme le chlorure de lithium.

La Société déposante a maintenant constaté que ces systèmes amorceurs + ligands sont utilisables pour permettre la synthèse de copolymères en étoile. De tels copolymères en étoile, dont la composition en séquences souples, semi-souples ou dures est choisie en fonction des applications visées des copolymères résultants, présentent, sur les copolymères séquencés linéaires correspondants, l'avantage d'un meilleur comportement rhéologique du fait qu'ils sont moins visqueux.

La demande internationale WO 86/00626 décrit la fabrication de polymères en étoile comportant des séquences acryliques par des techniques de polymérisation par transfert de groupes par les approches « arm-first », « core-first » ou « arm-core-arm » (En son Exemple 8, cette demande internationale décrit la préparation d'un copolymère en étoile $(PBu\text{-}PMMA)_n$-N par la technique « core-first ») :

- La synthèse de copolymères à séquences acryliques et méthacryliques dans lesquels l'autre monomère ne présente pas de groupe carbonyle conjugué (styrène, styrène substitué ...) n'est pas possible par cette technique. Elle l'est selon l'invention.
- La synthèse des copolymères en étoile dont les bras comportent deux ou trois séquences et où un monomère de type acrylate est polymérisé à la première étape en faisant suivre par la polymérisation du monomère de type méthacrylate, autrement dit la polymérisation d'un méthacrylate initiée par des anions polyacrylates n'est pas non plus possible par cette technique. Selon l'invention, le méthacrylate monomère peut être initié par l'anion polyacrylate de tert.-butyle, et réciproquement.

La présente invention porte d'abord sur ces copolymères en étoile, représentés par la formule générale (I) :

$$\left[\begin{array}{c}(PA\text{-}PB\text{-}PC)_n \\ \\ (PD\text{-}PE)_m\end{array}\right]\text{-}N \qquad (I)$$

dans laquelle :

ou bien :

- PA représente une séquence polymère issue d'au moins un monomère A choisi parmi les monomères vinylaromatiques et méthacryliques ;
- PB représente une séquence polymère issue d'au moins un monomère acrylique B ; et
- PC est éventuellement présent, auquel cas il représente une séquence polymère issue d'au moins un monomère C choisi parmi les monomères méthacryliques ;

ou bien :

- PA et PC représentent chacun une séquence polymère issue d'un même monomère acrylique ; et
- PB représente une séquence polymère issue d'au moins un monomère B choisi parmi les monomères méthacryliques ;
- PD représente une séquence polymère issue d'au moins un monomère D choisi parmi les monomères vinylaromatiques et méthacryliques, et simultanément PE représente une séquence polymère issue d'au moins un monomère acrylique E ; ou bien PD représente une séquence polymère issue d'au moins un monomère acrylique D, et simultanément PE représente une séquence polymère issue d'au moins un monomère méthacrylique E ;
- n représente le nombre de branches de (PA-PB-PC) et est compris entre 2 et 20 inclus, et m représente le nombre de branches de (PD-PE) et est compris entre 0 et 18 inclus, à la condition que la somme n+m ne dépasse pas la valeur de 20,
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinylaromatiques et méthacryliques ; et
- N représente un nodule réticulé d'au moins un monomère Mr polymérisé, ledit monomère Mr étant constitué par un agent de réticulation multifonctionnel présentant au moins deux doubles liaisons polymérisables par molécule.

A titre d'exemples de monomères vinylaromatiques de base des copolymères en étoile de l'invention, on peut citer le styrène ; les styrènes substitués comme, par exemple, l'alphaméthyl-styrène, le méthyl-4 styrène, le méthyl-3 styrène, le méthoxy-4 styrène, l'hydroxyméthyl-2 styrène, l'éthyl-4 styrène, l'éthoxy-4 styrène, le diméthyl-3,4 styrène, le chloro-2 styrène, le chloro-3 styrène, le chloro-4 méthyl-3 styrène, le tert.-butyl-3 styrène, le dichloro-2,4 styrène et le dichloro-2,6 styrène; le vinyl-1 naphtalène ; et les mélanges de ces monomères. On mentionne plus particulièrement le styrène et l'alphaméthylstyrène.

A titre d'exemples de monomères méthacryliques de base des copolymères en étoile de l'invention, on peut citer les méthacrylates d'alkyle dont le radical alkyle, le cas échéant substitué, par exemple par au moins un atome d'halogène comme le chlore ou le fluor et/ou au moins un groupe hydroxyle, contient 1 à 18 atomes de carbone, comme le méthacrylate de méthyle, que l'on préfère, les méthacrylates d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxy-éthyle, d'hydroxypropyle, d'hydroxybutyle ; le méthacrylate de glycidyle ; le méthacrylate de norbornyle ; le méthacrylate d'isobornyle ; le méthacrylonitrile ; les dialkylméthacrylamides ; et les mélanges de ces monomères.

A titre d'exemples de monomères acryliques de base des copolymères en étoile de l'invention, on peut citer les acrylates d'alkyle primaire, secondaire ou tertiaire dont le groupe alkyle, le cas échéant substitué par exemple, par au moins un atome d'halogène, tel que chlore ou fluor, et/ou au moins un groupe hydroxyle, après protection de ce groupe hydroxyle, contient de 1 à 18 atomes de carbone, en mentionnant plus particulièrement, l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle. On pourrait également mettre en oeuvre l'acrylate de phényle, l'acrylate de norbornyle, l'acrylate d'isobornyle et des acrylates d'alkylthioalkyle ou d'alcoxyalkyle, notamment les acrylates de méthoxy- et éthoxyéthyle, et également l'acrylonitrile et les dialkylacrylamides.

Quant au monomère de réticulation Mr, il peut être notamment choisi parmi les polyméthacrylates et polyacrylates de polyols, comme les diméthacrylate d'alkylène-glycol, tels que le diméthacrylate d'éthylène-glycol, le diméthacrylate de 1,3-butylène-glycol, le diméthacrylate de 1,4-butylène-glycol et le diméthacrylate de propylène-glycol, les diacrylates d'alkylène-glycol, tels que le diacrylate d'éthylène-glycol, le diacrylate de 1,3- ou de 1,4-butylène-glycol, le triméthacrylate de triméthylol-propane ; et l'acrylate et le méthacrylate de vinyle.

Les branches (PA-PB-PC) et, le cas échéant, les branches (PD-PE) du copolymère en étoile selon l'invention représentent généralement, pour 100 parties en poids dudit copolymère, environ 80 à 98 parties en poids, et son nodule N, environ 20 à 2 parties en poids.

Les copolymères séquencés en étoile de la présente invention peuvent présenter une masse moléculaire

moyenne en nombre d'environ 1 000 - 500 000 pour chacune de leurs séquences.

Par ailleurs, leur indice de polydispersité est généralement compris entre environ 1, 1 et 2.

Selon une variante de la présente invention, les blocs représentant une séquence d'un monomère acrylique et/ou méthacrylique, tel que précédemment défini, peuvent être hydrolysés en une séquence de l'acide acrylique et/ou méthacrylique correspondant, et ladite séquence peut, le cas échéant, être ultérieurement saponifiée en une séquence de l'acrylate et/ou du méthacrylate alcalin correspondant. Selon une autre variante de la présente invention, les blocs représentant une séquence d'un monomère acrylique et/ou méthacrylique, tel que précédemment défini, peuvent être transestérifiés en une séquence d'un autre monomère acrylique et/ou méthacrylique, par exemple, de façon à remplacer un acrylate tertiaire ou secondaire par un acrylate primaire.

La présente invention porte également sur un procédé de fabrication d'un copolymère en étoile de formule :

$$\left[\begin{array}{l}(PA-PB-PC)_n \\ \\ \quad (PD-PE)_m\end{array}\right] N \qquad (I)$$

dans laquelle : ou bien :

- PA est éventuellement présent et représente une séquence polymère issue d'au moins un monomère A choisi parmi les monomères vinylaromatiques et méthacryliques;
- PB représente une séquence polymère issue d'au moins un monomère acrylique B ; et
- PC est éventuellement présent, auquel cas il représente une séquence polymère issue d'au moins un monomère C choisi parmi les monomères méthacryliques ;

ou bien :

- PA et PC représentent chacun une séquence polymère issue d'un même monomère acrylique ; et
- PB représente une séquence polymère issue d'au moins un monomère B choisi parmi les monomères méthacryliques ;
- PD représente une séquence polymère issue d'au moins un monomère D choisi parmi les monomères vinylaromatiques et méthacryliques, et simultanément PE représente une séquence polymère issue d'au moins un monomère acrylique E ; ou bien PD représente une séquence polymère issue d'au moins un monomère acrylique D, et simultanément PE représente une séquence polymère issue d'au moins un monomère méthacrylique E ;
- n représente le nombre de branches de (PA-PB-PC) et est compris entre 2 et 20 inclus, et m représente le nombre de branches de (PD-PE) et est compris entre 0 et 18 inclus, à la condition que la somme n+m ne dépasse pas la valeur de 20,
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinylaromatiques et méthacryliques ; et
- N représente un nodule réticulé d'au moins un monomère Mr polymérisé, ledit monomère Mr étant constitué par un agent de réticulation multifonctionnel présentant au moins deux doubles liaisons polymérisables par molécule,

caractérisé par le fait que :

(1) on conduit une polymérisation anionique d'au moins un monomère A, à l'aide d'un système initiateur constitué par au moins un amorceur monofonctionnel de formule :

$$(R)_p\text{-}M \qquad (II)$$

dans laquelle :

- M désigne un métal alcalin ou alcalino-terreux (valence p de 1 ou 2) ; et
- R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle,

et, le cas échéant, au moins un ligand choisi parmi les sels de métaux alcalins ou alcalino-terreux, les sels organiques de métaux alcalins, et les complexants macrocycliques non azotés, ce qui permet d'obtenir un chaînon vivant de la séquence polymère $PA^-$ ; puis

(2) on fait réagir ledit chaînon vivant ainsi obtenu avec au moins un monomère B, en présence d'au moins un ligand tel que défini ci-dessus, ce qui permet d'obtenir un copolymère biséquencé vivant $(PA\text{-}PB)^-$, puis

(3) on fait réagir ledit copolymère biséquencé vivant ainsi obtenu avec au moins un monomère C, en présence d'au moins un ligand tel que défini ci-dessus, ce qui permet d'obtenir le copolymère triséquencé vivant $(PA\text{-}PB\text{-}PC)^-$; l'étape (3) pouvant être omise et le procédé pouvant être commencé en conduisant l'étape (1) avec le monomère B, ou bien l'on ne peut former qu'une séquence vivante $PA^-$ ou $PB^-$ ou $PC^-$;

(4) le cas échéant, on forme un copolymère biséquencé vivant $(PD\text{-}PE)^-$ en procédant comme en (1) et (2), mais en partant d'au moins un monomère D et d'au moins un monomère E ; ou bien on forme une séquence vivante $PD^-$ ou $PE^-$ en conduisant l'étape (1) avec les monomères D ou E,

(5) on fait réagir le copolymère vivant $(PA\text{-}PB\text{-}PC)^-$ ou $(PA\text{-}PB)^-$ ou $(PB\text{-}PC)^-$ ou la séquence vivante $PA^-$ ou $PB^-$ ou $PC^-$, le cas échéant en mélange avec le colymère biséquencé vivant $(PD\text{-}PE)^-$ ou la séquence vivante $PD^-$ ou $PE^-$ obtenu selon (4), dans le milieu qui a servi à conduire leur polymérisation par voie anionique, avec au moins un monomère Mr en excès molaire de 4 à 26 par centre actif, et on désactive les doubles liaisons par une réaction avec une source de protons consistant notamment en un alcool, de l'eau ou un acide protonique; et

(6) le cas échéant, on conduit une transestérification en milieu acide du copolymère en étoile obtenu.

Les agents amorceurs monofonctionnels de formule (II) utilisés à l'étape (1) sont, par exemple, le sec.-butyllithium, le n-butyllithium et l'alphaméthylstyryllithium, le 1,1-diphénylhexyllithium, le diphénylméthyllithium ou sodium ou potassium et le 1,1-diphényl-3-méthylphényllithium. Lorsque la séquence PA est issue d'un monomère vinylaromatique, on choisit, comme amorceurs, le sec.-butyllithium, le n-butyllithium et l'alphaméthylstyryllithium.

Le ligand peut être choisi parmi, d'une part, les sels minéraux de métaux alcalins ou alcalino-terreux par exemple, les chlorures, fluorures, bromures, iodures, borures, sulfates, nitrates et borates, et, d'autre part, les sels organiques de métaux alcalins, par exemple, les alcoolates, les esters d'acide carboxylique substitué en position $\alpha$ par ledit métal et les composés dans lesquels ledit métal alcalin est associe à un groupe tel que :

(A) les groupes de formule :

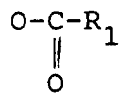 (III)

dans laquelle $R_1$ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,

(B) les groupes de formule :

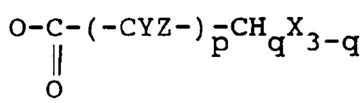 (IV)

dans laquelle :

- Y et Z, identiques ou différents l'un de l'autre, sont choisis parmi l'atome d'hydrogène et les atomes d'halogène ;
- p est un nombre entier allant de 0 à 4,
- X est un atome d'halogène, et
- q est un nombre entier allant de 0 à 2,

(C) les groupes de formule :

$$O\text{-}SO_2\text{-}CT_3 \qquad (V)$$

dans laquelle T est choisi parmi l'atome d'hydrogène et les atomes d'halogène, et

(D) les groupes de formule :

$$B(R_2)_4 \qquad (VI)$$

dans laquelle $R_2$ est choisi parmi l'atome d'hydrogène et les radicaux alkyle et aryle.

Des exemples de groupes de formule (III) sont les groupes acétate, propionate et benzoate. Des exemples de groupes de formule (IV) sont les groupes $\alpha$-bromoacétate et trifluoroacétate. Des exemples de groupes de formule (V) sont les groupes trifluorométhane sulfonique et méthane-sulfonique. Des exemples de groupes (VI) sont les groupes borohydrure et tétraphénylborure.

Le ligand peut être également constitué par un agent complexant macrocyclique non azoté, choisi notamment parmi les polyéthers cycliques (encore dénommés éthers-couronne) et les polythioéthers cycliques, tels que notamment des polyéthers macrocycliques dont l'anneau macrocyclique contient au moins 14 atomes de

carbone et d'oxygène, chaque atome d'oxygène de l'anneau étant séparé des autres atomes d'oxygène de l'anneau par deux ou bien trois atomes de carbone : de tels polyéthers macrocycliques ont déjà été décrits dans les brevets américains n° 3 687 978 et n° 4 826 941.

Dans le procédé selon l'invention, la proportion de ligand utilisé peut varier fortement par rapport à l'amorceur à l'étape (1). Cette quantité peut être, par exemple, largement excédentaire par rapport à la quantité molaire d'agent amorceur. Cette quantité peut aussi être égale ou inférieure à la quantité molaire d'agent amorceur. De préférence, le ligand est introduit dans une proportion molaire vis-à-vis de l'amorceur au moins égale à 1 et allant jusqu'à 50 environ.

Dans le procédé suivant l'invention, les polymérisations des étapes (1) à (5) s'effectuent en l'absence d'humidité et d'oxygène, et en présence d'au moins un solvant choisi, de préférence, parmi les solvants aromatiques, tels que le benzène et le toluène, ou bien le tétrahydrofuranne, le diglyme, le tétraglyme, l'orthoterphényle, le biphényle, la décaline, la tétraline, ou le diméthylformamide.

Quant à la température de polymérisation ou de copolymérisation, elle peut varier entre environ -78°C et 0°C, de préférence, entre environ -78°C et -20°C.

Les copolymères selon l'invention peuvent être hydrolysés à une température allant de 70° à 170°C environ, sous une pression allant de 1 à 15 bars et en présence de 0,5 à 10% environ en poids, par rapport au copolymère, d'un catalyseur acide tel que l'acide paratoluène sulfonique, l'acide méthane toluène sulfonique ou l'acide chlorhydrique, dans un solvant polaire tel que le dioxanne. Après hydrolyse, les copolymères comportant des séquences d'acide acrylique et/ou méthacrylique peuvent être précipités dans l'heptane, filtrés, lavés pour éliminer toute trace de catalyseur et finalement séchés. Ils peuvent aussi être ultérieurement neutralisés au moyen de potasse méthanolique ou encore de tétraméthylammonium hydroxyde en solution dans un mélange de toluène et de méthanol afin de former les ionomères triséquencés correspondants.

Lorsque les copolymères selon l'invention comportent une séquence dérivée d'un acrylate d'alkyle tertiaire ou secondaire, cette séquence peut également être transestérifiée de manière connue en une séquence d'un acrylate d'alkyle primaire.

Les séquences de polymères issus de monomères vinylaromatiques et de poly(méthacrylate de méthyle) des copolymères en étoile selon l'invention sont des séquences rigides ; les séquences de poly(méthacrylate d'alkyle autre que méthyle) peuvent être des séquences semi-souples ou rigides ; et les séquences de poly(acrylate de l'alkyle) sont des séquences souples, conférant la stabilité au vieillissement. En fonction de la teneur en séquences rigides, souples et semi-souples, on obtient pour les polymères en étoile de l'invention, des élastomères thermoplastiques (ayant une composition en séquences souples acryliques de l'ordre de 60-90% en poids) applicables notamment à la fabrication de pièces moulées par injection ; des polymères thermoplastiques rigides choc (ayant une composition en séquences souples de l'ordre de 10-50% en poids) ; et des polymères renforçateurs choc de diverses matrices thermoplastiques (pour une composition en séquences souples de l'ordre de 40 - 80% en poids).

Les exemples suivants illustrent la présente invention sans en limiter la portée.

Dans ces exemples,

| | |
|---|---|
| St | = styrène |
| α-MeSt | = alphaméthylstyrène |
| tBA | = acrylate de tertiobutyle |
| nBA | = acrylate de n-butyle |
| MMA | = méthacrylate de méthyle |
| BMAE | = bisméthacrylate de l'éthylèneglycol $(H_2C{=}C(CH_3)COOCH_2)_2$ |
| APTS | = acide paratoluènesulfonique monohydraté |
| THF | = tétrahydrofuranne. |

Dans tous ces exemples, la chromatographie d'exclusion a été effectuée en utilisant un appareil WATERS GPC 501 équipé de deux colonnes linéaires, avec le tétrahydrofuranne comme éluant à un débit de 1 ml/min. Les masses moléculaires moyennes en nombre ont été déterminées au moyen d'un osmomètre à membrane HP 502.

Exemples 1 à 7

MODE OPERATOIRE GENERAL

La voie de synthèse peut être schématisée comme suit :

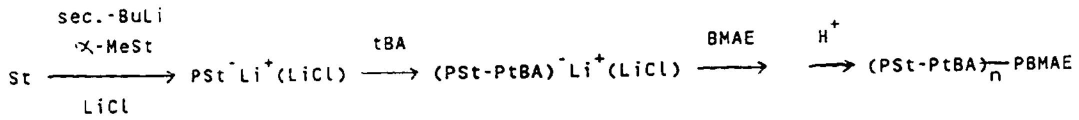


Les solvants et le styrène monomère sont purifiés par les techniques habituelles de la polymérisation anionique ; les monomères acryliques sont traités successivement par l'hydrure de calcium et l'aluminium triéthyle.

La polymérisation du styrène est amorcée dans le THF à -78°C par un composé organolithien que l'on a obtenu en faisant réagir le sec.-butyllithium avec un léger excès molaire d'α-MeSt (10x) en présence de 5 moles de LiCl par mole de ce composé organolithien.

Après 15 minutes à -78°C, l'acrylate de tert.-butyle est ajouté au milieu réactionnel, par capillaires métalliques, sous atmosphère inerte. La copolymérisation anionique séquencée de l'acrylate de tert.-butyle est effectuée sur une durée de 2 heures dans le THF à -78°C.

Le copolymère biséquencé vivant (PSt-PtBA) $^-Li^+$ ainsi obtenu est alors couplé à -78°C, en lui ajoutant du BMAE en excès molaire de 4 à 26 par rapport aux centres actifs organolithiens et en laissant réagir pendant 2 heures au moins. La solution de copolymère est alors versée sous agitation dans un grand excès de méthanol, le précipité est lavé, filtré et séché à 100°C. On obtient ainsi des copolymères séquencés en étoile dont le nombre de branches n peut varier entre 2 et 6.

Afin de donner au matériau ses propriétés d'élastomère thermoplastique, la séquence PtBA est alors transestérifiée en PnBA. La réaction de transestérification se fait par catalyse acide à l'aide d'APTS.

Dans un ballon muni d'un réfrigérant et gardé sous atmosphère inerte, une quantité précise du copolymère en étoile est dissoute dans un mélange toluène/n-butanol. La quantité de n-butanol correspond au minimum à un excès molaire de 3 par rapport aux unités tBA.

Après dissolution, on ajoute la quantité d'APTS nécessaire à une transestérification quantitative de la séquence acrylique (correspondant à 3-5% en moles par rapport au PtBA). La solution est alors chauffée à reflux (~120°C), pendant 5 heures.

Après réaction, la solution du copolymère séquencé en étoile $(PSt\text{-}PnBA)_{\overline{n}}$ PBMAE est alors versée sous agitation dans un grand excès de méthanol/$H_2O$ 50/50. Le précipité est lavé et filtré. L'étape de précipitation est répétée deux fois afin d'éliminer toute trace de catalyseur.

Le produit final est alors séché à 100°C sous pression réduite. Le rendement de la réaction de transestérification est vérifié par RMN du proton et par analyse thermique différentielle.

- Disparition du pic correspondant au groupe tert.-butyle situé à 1,39 ppm et apparition du pic correspondant au $CH_2$ du groupe ester du n-BA situé à 4 ppm.
- Apparition d'une transition vitreuse à -45°C correspondant à la séquence PnBA et disparition de la transition vitreuse de la séquence PtBA située à ~+45°C.

Dans les conditions précitées, le rendement de transestérification avoisine 95%. Les 5% restants sont constitués d'unités acide acrylique, susceptibles d'être neutralisées ultérieurement.

Dans le Tableau 1 ci-après, sont indiquées les caractéristiques des différents produits obtenus.

Tableau 1

| Ex. | $\overline{Mn}$ de PSt-PtBa * | $\overline{Mn}$ de PtBA * | % de tBA en poids ** | $\overline{Mw}/\overline{Mn}$ PSt-PtBA | Mole BMAE / Mole sec.BuLi | $\overline{n}$ * | % couplage |
|---|---|---|---|---|---|---|---|
| 1 | 90 000 | 63 000 | 70,5 | 1,05 | 9,0 | 4,5 | 86 |
| 2 | 70 000 | 57 000 | 76,0 | 1,10 | 9,6 | 5,5 | 87 |
| 3 | 66 000 | 47 000 | 67,0 | 1,10 | 4,0 | 4,5 | 76 |
| 4 | 65 000 | 40 000 | 68,5 | 1,20 | 26,0 | 6,0 | 80 |
| 5 | 49 000 | 39 500 | 76 | 1,08 | 8,7 | 4,2 | 82 |
| 6 | 120 000 | 90 000 | 80 | 1,06 | 9,0 | 3,7 | 80 |
| 7 | 64 000 | 51 000 | 82 | 1,05 | 7,2 | 3,7 | 92 |

* Valeurs déterminées par chromatographie d'exclusion de gel

** Valeur déterminée par RMN $^{1}H$

Le Tableau 2 indique les propriétés mécaniques, après transestérification, des copolymères des Exemples 1, 2, 3 et 5.

Tableau 2

| Ex. | Polymère $(PSt-PnBA)_n$ PBMAE ** | Contrainte à la rupture * $\overline{\sigma_r}$ N/mm$^2$ | (kg/mm$^2$) | Allongement à la rupture * $\overline{\varepsilon_r}$ (%) |
|---|---|---|---|---|
| 1 | 27-63 | 10,8 | (1,1) | 416 |
| 2 | 13-57 | 10,8 | (1,1) | 373 |
| 3 | 19-47 | 9,8 | (1,0) | 417 |
| 5 | 9,5-39,5 | 12,7 | (1,3) | 530 |

* Valeurs déterminées à partir des courbes contrainte-allongement pour une vitesse de traction de 2 cm/min.

** $\overline{Mn} \times 10^{-3}$.

Exemple 8

MODE OPERATOIRE GENERAL

$$MMA \xrightarrow[LiCl]{sec.-BuLi,\ \alpha\text{-}MeSt} PMMA^{-}Li^{+}\ (LiCl) \xrightarrow{tBA} (PMMA\text{-}PtBA)^{-}Li^{+}\ (LiCl) \xrightarrow{BMAE} \xrightarrow{H^{+}} (PMMA\text{-}PtBA)_{n}\text{-}PBMAE$$

Les solvants sont purifiés par les techniques habituelles de la polymérisation anionique ; les monomères acryliques sont traités successivement par l'hydrure de calcium et l'aluminium triéthyle. La première séquence PMMA est amorcée dans le THF à -78°C par un composé organolithien que l'on a obtenu en faisant réagir le sec.-butyllithium avec un léger excès molaire d'α-MeSt en présence de 5 moles de LiCl par mole de ce composé organolithien. Après 1 heure de polymérisation à -78°C, on introduit le tBA dans le milieu réactionnel en utilisant une technique de transvasement par capillaires métalliques sous atmosphère inerte, et la copolymérisation anionique séquencée de ce deuxième monomère est effectuée sur une durée d'une heure dans le THF à -78°C.

Le couplage par le BMAE du copolymère biséquencé vivant $(PMMA\text{-}PtBA)^- Li^+$ ainsi obtenu et sa récupération s'effectuent dans les mêmes conditions que celles décrites pour les Exemples 1 à 7. La séquence PtBA est alors transestérifiée en PnBA ; la réaction de transestérification se fait par catalyse acide à l'aide d'APTS, selon le mode opératoire décrit pour les Exemples 1 à 7.

Dans ces conditions, la séquence PMMA reste intacte et le rendement de transestérification avoisine 95% comme dans les Exemples précédents.

Le Tableau 3 ci-après indique les caractéristiques d'un produit obtenu dans ces conditions.

Tableau 3

| Ex. | $\overline{Mn}$ de PMMA-PtBA * | $\overline{Mn}$ de PtBA * | % de tBA en poids ** | $\overline{Mw}/\overline{Mn}$ PMMA-PtBA | Mole BMAE / Mole sec.BuLi | $\overline{n}$ * | % de couplage |
|---|---|---|---|---|---|---|---|
| 8 | 56 000 | 41 000 | 65 | 1,08 | 5,6 | 4,1 | 67 |

* Valeurs déterminées par chromatographie d'exclusion de gel

** Valeur déterminée par RMN $^1H$

Le Tableau 4 indique les propriétés mécaniques après transestérification du matériau de l'Exemple 8.

Tableau 4

| Ex. | Polymère $(PMMA\text{-}PnBA)_n$ PBMAE | Contrainte à la rupture * $\overline{\sigma_r}$ $N/mm^2$ ($kg/mm^2$) | Allongement à la rupture * $\overline{\varepsilon_r}$ (%) |
|---|---|---|---|
| 8 | 15-41 | 12,7 (1,3) | 460 |

* Valeurs déterminées à partir des courbes contrainte/allongement pour une vitesse de traction de 2 cm/min.

** $\overline{Mn} \times 10^{-3}$

Exemples 9 et 10

MODE OPERATOIRE GENERAL

St —(sec.-BuLi, α-MeSt, LiCl)→ $PSt^-Li^+$ —(tBA)→ $(PSt\text{-}PtBA)^-Li^+$ (LiCl)

—(MMA)→ $(PSt\text{-}PtBA\text{-}PMMA)^-Li^+$ (LiCl) —(BMAE)→ —($H^+$)→ $(PSt\text{-}PtBA\text{-}PMMA)_n$—PBMAE

Les trois monomères St, tBA et MMA sont polymérisés successivement selon les conditions opératoires décrites pour les Exemples 1 à 8.

Le copolymère triséquencé vivant $(PSt\text{-}PtBA\text{-}PMMA)^-Li^+$ ainsi obtenu est alors couplé par le BMAE selon les techniques opératoires décrites pour les Exemples précédents.

Afin de donner au matériau ses propriétés d'élastomère thermoplastique, la séquence PtBA est alors transestérifiée en PnBA selon les conditions opératoires décrites pour les Exemples 1 à 8.

Le Tableau 5 ci-dessous résume les caractéristiques de produits obtenus.

Tableau 5

| Ex | $\overline{Mn}$ de PSt-PtBA-PMMA * | $\overline{Mn}$ de PSt-PtBA * | $\overline{Mn}$ de PtBA * | % de tBA en poids ** | $\overline{Mw}/\overline{Mn}$ de PSt-PtBA-PMMA | Mole BMAE / Mole sec.BuLi | $\overline{n}$ * | % couplage |
|---|---|---|---|---|---|---|---|---|
| 9 | 160 000 | 145 000 | 120 000 | 72 | 1,1 | 6,0 | 5,0 | 60 |
| 10 | 101 000 | 86 000 | 63 500 | 60 | 1,07 | 5,6 | 4,4 | 77 |

* Valeurs déterminées par chromatographie d'exclusion de gel

** Valeur déterminée par RMN $^1H$

Le Tableau 6 reprend les propriétés mécaniques, après transestérification du matériau de l'Exemple 10.

## Tableau 6

| Ex. | Polymère $(PSt\text{-}PtBA\text{-}PMMA)_n$ PBMAE ** | Limite élastique $\bar{\sigma}_y$ N/mm² (kg/mm²) * | Contrainte à la rupture $\bar{\sigma}_r$ N/mm² (kg/mm²) * | Allongement à la rupture $\bar{\varepsilon}_r$ (%) * |
|---|---|---|---|---|
| 10 | 22,5-63,5-15 | 8,83 (0,90) | 12,36 (1,26) | 235 |

* Valeurs déterminées à partir des courbes contrainte/allongement pour une vitesse de traction de 2cm/min.

** $\overline{Mn} \times 10^{-3}$

Exemples 11 et 12

MODE OPERATOIRE GENERAL

α-MeSt —(sec.-BuLi / LiCl)→ $P\alpha\text{-}MeSt^-Li^+$ (LiCl) —(tBA)→ $(P\alpha\text{-}MeSt\text{-}PtBA)^-Li^+$ (LiCl)

—(BMAE)→ —($H^+$)→ $(P\alpha\text{-}MeSt\text{-}PtBA)_n$ PBMAE

La copolymérisation est réalisée dans les mêmes conditions que celles décrites pour les Exemples 1 à 7, excepté que l'α-MeSt est utilisé à la place du styrène.

Le couplage du copolymère biséquencé vivant $(P\alpha\text{-}MeSt\text{-}PtBA)^-Li^+$ par le BMAE et la transestérification du PtBA en PnBA s'effectuent dans les mêmes conditions que celles précitées.

Le Tableau 7 ci-dessous résume les caractéristiques de produits obtenus.

## Tableau 7

| Ex. | $\overline{Mn}$ de Pα-MeSt-PtBA * | $\overline{Mn}$ de PtBA * | % de tBA en poids ** | $\overline{Mw}/\overline{Mn}$ Pα-MeSt-PtBA | Mole BMAE / Mole sec.BuLi | $\bar{n}$ * | % de couplage |
|---|---|---|---|---|---|---|---|
| 11 | 140 000 | 109 000 | 70 | 1,12 | 6,0 | 3,8 | 78 |
| 12 | 102 000 | 75 000 | 70 | 1,2 | 5,2 | 3,5 | 87 |

* Valeurs déterminées par chromatographie d'exclusion de gel

** Valeur déterminée par RMN $^1H$

Exemple 13

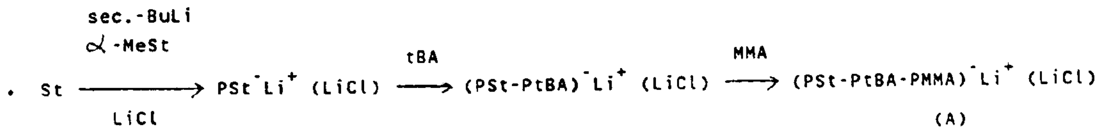


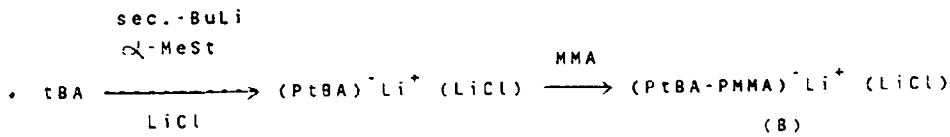


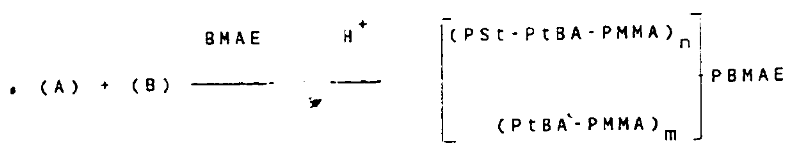


La copolymérisation séquencée du polymère vivant (A) se déroule selon les conditions opératoires décrites pour les Exemples 9 et 10. La première séquence PtBA du polymère (B) est amorcée dans le THF à -78°C par un compose organolithien que l'on a obtenu en faisant réagir le sec.-butyllithium avec un léger excès molaire d'α-MeSt en présence de 5 moles de LiCl par mole de ce composé organolithien. Après 30 min. de polymérisation à -78°C, le méthacrylate de méthyle est introduit dans le milieu réactionnel, par capillaire métallique, sous atmosphère inerte. La copolymérisation anionique séquencée est effectuée sur une durée d'une heure dans le THF à -78°C.

Ensuite, à l'aide d'un appareillage expérimental adéquat, les deux polymères vivants sont mélangés sous atmosphère inerte à -78°C. Après homogénéisation de la solution, le mélange de copolymères bi et triséquencés vivants est alors couplé à -78°C en lui ajoutant du BMAE en excès molaire de 4 à 26 par rapport aux centres actifs organolithiens et en laissant réagir pendant deux heures au moins.

La récupération du polymère après couplage s'effectue dans les mêmes conditions que celles décrites pour les exemples précédents.

Les séquences PtBA sont alors transestérifiées en PnBA ; la réaction de transestérification se fait par catalyse acide à l'aide d'APTS selon le mode opératoire décrit pour les exemples précédents.

Dans ces conditions, les séquences PMMA restent intactes et le rendement de transestérification avoisine 95%.

Le Tableau 8 ci-dessous résume les caractéristiques d'un produit obtenu.

## Tableau 8

| Ex. | Branche | $\overline{Mn}$ de PSt-PtBA-PMMA * | $\overline{Mn}$ de PSt-PtBA * | $\overline{Mn}$ de PtBA * | %tBA en poids ** | $\overline{Mw}/\overline{Mn}$ de PSt-PtBA-PMMA * |
|---|---|---|---|---|---|---|
| 13 | A | 113 000 | 98 000 | 72 000 | 60 | 1,15 |

| Ex. | Branche | $\overline{Mn}$ de PtBA-PMMA * | $\overline{Mw}/\overline{Mn}$ de PtBA-PMMA * | $\overline{Mn}$ de PtBA * | $\overline{Mw}/\overline{Mn}$ PtBA * | % tBA en poids ** |
|---|---|---|---|---|---|---|
| 13 | B | 157 000 | 1,15 | 97 000 | 1,1 | 71 |

## Tableau 8 (suite)

| Mole DMAE / Mole sec.BuLi | $\overline{Mn}$ après couplage * | % couplage |
|---|---|---|
| 8,0 | 760 000 | 79 |

* Valeurs déterminées par chromatographie d'exclusion de gel

** Valeur déterminée par RMN $^{1}H$

### Exemple 14

$$\cdot\ MMA \xrightarrow[LiCl]{sec.\text{-}BuLi,\ \alpha\text{-}MeSt} PMMA^{-}Li^{+}\ (LiCl) \xrightarrow{tBA} (PMMA\text{-}PtBA)^{-}Li^{+}\ (LiCl) \xrightarrow{MMA} (PMMA\text{-}PtBA\text{-}PMMA)^{-}Li^{+}\ (LiCl)$$

(A)

$$\cdot\ tBA \xrightarrow[LiCl]{sec.\text{-}BuLi,\ \alpha\text{-}MeSt} PtBA^{-}Li^{+}\ (LiCl) \xrightarrow{MMA} (PtBA\text{-}PMMA)^{-}Li^{+}\ (LiCl)$$

(B)

$$\cdot\ (A) + (B) \xrightarrow{BMAE} \xrightarrow{H^{+}} \left[\begin{matrix}(PMMA\text{-}PtBA\text{-}PMMA)_{n}\\ (PtBA\text{-}PMMA)_{m}\end{matrix}\right] PBMAE$$

La copolymérisation anionique séquencée des polymères vivants (A) et (B) se déroule selon les conditions opératoires décrites repsectivement pour les Exemples 8 et 13.

Le couplage du mélange des copolymères vivants $(PMMA\text{-}PtBA\text{-}PMMA)^{-}Li^{+}$ et $(PtBA\text{-}PMMA)^{-}Li^{+}$ par le BMAE et la transestérification des séquences PtBA en PnBA s'effectuent dans les mêmes conditions que celles

citées pour l'Exemple 13.

Le Tableau 9 ci-dessous résume les caractéristiques d'un produit obtenu.

Tableau 9

| Ex. | Branche | $\overline{Mn}$ de PMMA-PtBA-PMMA * | $\overline{Mn}$ de PMMA-PtBA * | $\overline{Mn}$ de PtBA * | %tBA en poids ** | $\overline{Mw}/\overline{Mn}$ de PMMA-PtBA-PMMA * |
|---|---|---|---|---|---|---|
| 14 | A | 62 000 | 52 000 | 41 200 | 61 | 1,15 |

| Ex. | Branche | $\overline{Mn}$ de PtBA-PMMA * | $\overline{Mw}/\overline{Mn}$ de PtBA-PMMA * | $\overline{Mn}$ de PtBA * | $\overline{Mw}/\overline{Mn}$ PtBA * | % tBA en poids ** |
|---|---|---|---|---|---|---|
| 14 | B | 42 000 | 1,12 | 32 000 | 1,1 | 75 |

Tableau 9 (suite)

| Mole DMAE / Moles sec.BuLi | $\overline{Mn}$ après couplage * | % couplage |
|---|---|---|
| 9,0 | 344 000 | 81 |

* Valeurs déterminées par chromatographie d'exclusion de gel

** Valeur déterminée par RMN $^1H$

Exemple 15

$$\cdot\ MMA \xrightarrow[LiCl]{(Ph)_2CHK} PMMA^-K^+\ (LiCl) \xrightarrow{tBA} (PMMA\text{-}PtBA)^-K^+\ (LiCl) \xrightarrow{MMA} \underset{(A)}{(PMMA\text{-}PtBA\text{-}PMMA)^-K^+\ (LiCl)}$$

$$\cdot\ tBA \xrightarrow[LiCl]{(Ph)_2CHK} PtBA^-K^+(LiCl) \xrightarrow{MMA} \underset{(B)}{(PtBA\text{-}PMMA)^-K^+\ (LiCl)}$$

$$\cdot\ (A) + (B) \xrightarrow{BMAE} \xrightarrow{H^+} \left[\begin{array}{c}(PMMA\text{-}PtBA\text{-}PMMA)_n \\ (PtBA\text{-}PMMA)_m\end{array}\right] PBMAE$$

La copolymérisation anionique séquencée des polymères vivants (A) et (B) se déroule selon les conditions opératoires décrites respectivement pour les Exemples 8 et 13, à la seule différence que l'amorceur est, dans ce cas, le diphényl méthyl potassium.

Le couplage du mélange des copolymères vivants $(PMMA\text{-}PtBA\text{-}PMMA)^-K^+$ (LiCl) et $(PtBA\text{-}PMMA)^-K^+$

(LiCl) par le BMAE et la transestérification des séquences PtBA en PnBA s'effectuent dans les mêmes conditions que celles citées pour l'exemple 13.

Le Tableau 10 ci-dessous résume les caractéristiques d'un produit obtenu.

Tableau 10

| Branche | $\overline{Mn}$ de PMMA-PtBA-PMMA | $\overline{Mn}$ de PMMA-PtBA | $\overline{Mn}$ de PtBA | %tBA en poids | $\overline{Mw}/\overline{Mn}$ de PMMA-PtBA-PMMA |
|---|---|---|---|---|---|
| A | 62000 | 52000 | 41200 | 61 | 1,15 |

| Branche | $\overline{Mn}$ de PtBA-PMMA | $\overline{Mw}/\overline{Mn}$ de PtBA-PMMA | $\overline{Mn}$ de PtBA | $\overline{Mw}/\overline{Mn}$ PtBA | % tBA en poids |
|---|---|---|---|---|---|
| B | 42000 | 1,12 | 32000 | 1,1 | 75 |

Tableau 10 (suite)

| Mole DMAE / Moles sec.BuLi | $\overline{Mn}$ après couplage * | % couplage * |
|---|---|---|
| 9,0 | 344 000 | 81 |

* Valeurs déterminées par chromatographie d'exclusion de gel.

Exemple 16

$$\cdot\ St \xrightarrow[LiCl]{sec.-BuLi\ \alpha\text{-}MeSt} \underset{(LiCl)}{PSt^-Li^+} \xrightarrow{tBA} \underset{(A)}{(PSt\text{-}PtBA)^-Li^+}\ (LiCl)$$

$$\cdot\ tBa \xrightarrow[LiCl]{sec.BuLi\ \alpha\text{-}MeSt} \underset{(B)}{(PtBA)^-Li^+}\ (LiCl)$$

$$\cdot\ (A) + (B) \xrightarrow{BMAE} \xrightarrow{H^+} \left[\begin{array}{c}(PSt\text{-}PtBA)_n \\ (PtBA)_m\end{array}\right] PBMAE$$

La copolymérisation séquencée du polymère vivant (A) se déroule selon les conditions opératoires décrites pour les Exemples 9 et 10. La séquence PtBA du polymère (B) est amorcée dans le THF à -78°C par un composé organolithien que l'on a obtenu en faisant réagir le sec.-butyllithium avec un léger excès molaire d'α-MeSt en présence de 5 moles de LiCl par mole de ce composé organolithien.

Ensuite, à l'aide d'un appareillage expérimental adéquat, les deux polymères vivants sont mélangés sous atmosphère inerte à -78°C. Après homogénéisation de la solution, le mélange de copolymères bi- et monoséquencés vivants est alors couplé à -78°C en lui ajoutant du BMAE en excès molaire de 4 à 26 par rapport aux centres actifs organolithiens et en laissant réagir pendant deux heures au moins.

La récupération du polymère après couplage s'effectue dans les mêmes conditions que celles décrites pour les exemples précédents.

Les séquences PtBA sont alors transestérifiées en PnBA ; la réaction de transestérification se fait par catalyse acide à l'aide d'APTS selon le mode opératoire décrit pour les exemples précédents.

Le Tableau 11 ci-dessous résume les caractéristiques d'un produit obtenu.

Tableau 11

| Branche | $\overline{Mn}$ de PSt-PtBA | $\overline{Mn}$ de PSt | $\overline{Mn}$ de PtBA | %tBA en poids | $\overline{Mw}/\overline{Mn}$ de PSt-PtBA |
|---|---|---|---|---|---|
| A | 50000 | 15 000 | 35 000 | 68 | 1,15 |

| Branche | $\overline{Mn}$ de PtBA | $\overline{Mw}/\overline{Mn}$ de PtBA |
|---|---|---|
| B | 60000 | 1,10 |

Les propriétés mécaniques de ce produit après transestérification sont rassemblées dans le Tableau 12 ci-dessous.

Tableau 12

| $\frac{\text{Mole DMAE}}{\text{Mole sec.BuLi}}$ | % couplage | $\sigma_r$ N/mm$^2$ (kg/mm$^2$) | $\varepsilon_r$ % |
|---|---|---|---|
| 17 | 88 | 6,86 (0,70) | 707 |

Exemple 17

$$\cdot\ \text{MMA} \xrightarrow[\text{LiCl}]{\text{sec.-BuLi}\ \alpha\text{-MeSt}} \text{PMMA}^-\text{Li}^+\ (\text{LiCl})\quad [A]$$

$$\cdot\ \text{tBA} \xrightarrow[\text{LiCl}]{\text{sec.BuLi}\ \alpha\text{-MeSt}} \text{PtBA}^-\text{Li}^+\ (\text{LiCl})\quad [B]$$

$$\cdot\ [A] + [B] \xrightarrow{\text{BMAE}} \xrightarrow{H^+} \begin{bmatrix} (\text{PMMA})_n \\ (\text{PtBA})_m \end{bmatrix} \text{PBMAE}$$

La copolymérisation des polymères vivants (A) et (B) se déroule selon les conditions opératoires décrites pour les exemples 8 et 10. Les séquences PtBA et PMMA sont amorcées dans le THF à -78°C par un composé organolithien que l'on a obtenu en faisant réagir le sec-butyllithium avec un léger excès molaire d'α-MeSt en présence de 5 moles de LiCl par mole de ce composé organolithien. Après 15 minutes de polymérisation à -78°C, le MMA ou tBA est introduit dans le milieu réactionnel, par capillaire métallique, sous atmosphère inerte. La copolymérisation anionique est effectuée sur une durée d'une heure dans le THF à -78°C.

Ensuite à l'aide d'un appareillage expérimental adéquat, les deux polymères vivants sont mélangés sous atmosphère inerte à -78°C. Après homogénéisation de la solution, le mélange d'homopolymères vivants est alors couplé à -78°C en lui ajoutant du BMAE en excès molaire de 4 à 26 par rapport aux centres actifs organolithiens et en laissant réagir pendant 2 heures au moins.

La récupération du polymère après couplage s'effectue dans les mêmes conditions que celles décrites pour les exemples précédents.

Les séquences PtBA sont alors transestérifiées en PnBA ; la réaction de transestérification se fait par catalyse acide à l'aide d'APTS selon le mode opératoire décrit pour les exemples précédents.

Dans ces conditions, les séquences PMMA restent intactes et le rendement de transestérification avoisine 95%.

Le Tableau 13 ci-dessous résume les caractéristiques d'un produit obtenu.

Tableau 13

| Branche | $\overline{Mn}$ de PtBA | $\overline{Mw}/\overline{Mn}$ de PtBA |
|---|---|---|
| A | 100000 | 1,15 |

| Branche | $\overline{Mn}$ de PMMA | $\overline{Mw}/\overline{Mn}$ de PMMA |
|---|---|---|
| B | 15000 | 1,15 |

Les propriétés mécaniques de ce produit après transestérification sont rassemblées dans le Tableau 14 ci-dessous.

Tableau 14

| Mole BMAE | $\overline{Mn} \times 10^3$ | $\overline{Mn}$ après couplage * | Couplage % | Contrainte à la rupture $\sigma_r$ $N/mm^2$ ($kg/mm^2$) | Allongement à la rupture $\varepsilon_r$ % |
|---|---|---|---|---|---|
| 5,0 | | 887 000 | 90 | 0,69 (0,07) | 65 |

* Valeur déterminée par chromatographie d'exclusion de gel.

Exemple 18

$$\cdot\ St \xrightarrow[LiCl]{Sec.-BuLi \quad \alpha\text{-}MeSt} PSt^{-}Li^{+}\ (LiCl) \xrightarrow{tBA} \underset{[A]}{(PSt\text{-}PtBA)\text{-}Li^{+}}\ (LiCl)$$

$$\cdot\ St \xrightarrow[LiCl]{Sec.-BuLi} \underset{[B]}{PSt^{-}Li^{+}\ (LiCl)}$$

$$\cdot\ [A] + [B] \xrightarrow{BMAE} \xrightarrow{H^{+}} \begin{bmatrix} (PSt\text{-}PtBA)_n \\ (PSt)_m \end{bmatrix} \text{-PBMAE}$$

La copolymérisation séquencée du polymère vivant (A) se déroule selon les conditions opératoires décrites pour les exemples 9 et 10. La première séquence (PSt-PtBA) est amorcée dans le THF à -78°C par un composé organolithien que l'on a obtenu en faisant réagir le sec.-butyllithium avec un léger excès molaire d'α-MeSt en présence de 5 moles de LiCl par mole de ce composé organolithien. Après 15 minutes de polymérisation du styrène à -78°C, le tBA est introduit dans le milieu réactionnel, par capillaire métallique, sous atmosphère inerte. La copolymérisation anionique séquencée est effectuée sur une durée de minutes dans le THF à -78°C.

Ensuite, à l'aide d'un appareillage expérimental adéquat, les deux polymères vivants sont mélangés sous atmosphère inerte à -78°C. Après homogénéisation de la solution, le mélange de copolymères bi- et monoséquencé vivants est alors couplé à -78°C en lui ajoutant du BMAE en excès molaires de 4 à 26 par rapport aux centres actifs organolithiens et en laissant réagir pendant 2 heures au moins.

La récupération du polymère après couplage s'effectue dans les mêmes conditions que celles décrites pour les exemples précédents.

Les séquences PtBA sont alors transestérifiées en PnBA ; la réaction de transestérification se fait par catalyse acide à l'aide d'APTS selon le mode opératoire décrit pour les exemples précédents.

Le Tableau 15 ci-dessous résume les caractéristiques d'un produit obtenu.

Tableau 15

| Branche | $\overline{Mn}$ de PSt-PtBA | $\overline{Mn}$ de PtBA | % tBA en poids | $\overline{Mw}/\overline{Mn}$ de PSt-PtBA |
|---|---|---|---|---|
| A | 92 000 | 77 000 | 80 | 1,15 |

Tableau 15 (suite)

| Branche | $\overline{Mn}$ de PSt | $\overline{Mw}/\overline{Mn}$ de PSt |
|---|---|---|
| B | 15 000 | 1,05 |

Les propriétés mécaniques de ce produit après transestérification sont rassemblées dans le Tableau 16 ci-dessous.

Tableau 16

| Mole DMAE / Mole sec.BuLi | % couplage | Contrainte à la rupture $\sigma_r$ N/mm$^2$ (kg/mm$^2$) | Allongement à la rupture $\varepsilon_r$ % |
|---|---|---|---|
| 26 | 70 | 7,55 (0,70) | 707 |

## Revendications

**Revendications pour les Etats contractants suivants : AT, BE, CH, DE, DK, FR, GB, GR, IT, LI, LU, NL, SE**

**1.** Copolymères séquencés en étoile, représentés par la formule générale (I) :

$$\left[\begin{matrix}(PA\text{-}PB\text{-}PC)_n \\ \\ (PD\text{-}PE)_m\end{matrix}\right] N \qquad (I)$$

dans laquelle :
ou bien :
- PA représente une séquence polymère issue d'au moins un monomère A choisi parmi les monomères vinylaromatiques et méthacryliques ;
- PB représente une séquence polymère issue d'au moins un monomère acrylique B ; et
- PC est éventuellement présent, auquel cas il représente une séquence polymère issue d'au moins un monomère C choisi parmi les monomères méthacryliques ;

ou bien :
- PA et PC représentent chacun une séquence polymère issue d'un même monomère acrylique ; et
- PB représente une séquence polymère issue d'au moins un monomère B choisi parmi les monomères méthacryliques ;
- PD représente une séquence polymère issue d'au moins un monomère D choisi parmi les monomères vinylaromatiques et méthacryliques, et simultanément PE représente une séquence polymère issue d'au moins un monomère acrylique E ; ou bien PD représente une séquence polymère issue d'au moins un monomère acrylique D, et simultanément PE représente une séquence polymère issue d'au moins un monomère méthacrylique E;
- n représente le nombre de branches de (PA-PB-PC) et est compris entre 2 et 20 inclus, et m représente le nombre de branches de (PD-PE) et est compris entre 0 et 18 inclus, à la condition que la somme n+m ne dépasse pas la valeur de 20,
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinylaromatiques et méthacryliques ; et
- N représente un nodule réticulé d'au moins un monomère Mr polymérisé, ledit monomère Mr étant constitué par un agent de réticulation multifonctionnel présentant au moins deux doubles liaisons polymérisables par molécule.

**2.** Copolymères selon la revendication 1, caractérisés par le fait que le monomère vinylaromatique de base est choisi parmi le styrène ; les styrènes substitués ; et leurs mélanges.

**3.** Copolymères selon l'une des revendications 1 et 2, caractérisés par le fait que le monomère méthacrylique

de base est choisi parmi les méthacrylates d'alkyle en $C_1$-$C_{18}$ ; éventuellement substitué par halogène et/ou hydroxyle, le méthacrylate de glycidyle ; le méthacrylate de norbornyle ; le méthacrylate d'isobornyle, le méthacrylonitrile ; les dialkylméthacrylamides ; l'acide méthacrylique ; et leurs mélanges.

**4.** Copolymère séquencé selon l'une des revendications 1 à 3, caractérisé par le fait que le monomère acrylique de base est choisi parmi les acrylates d'alkyle en $C_1$-$C_{18}$ ; l'acrylate de phényle ; l'acrylate d'isobornyle ; l'acrylate de norbornyle ; les acrylates d'alkylthioalkyle ou d'alcoxyalkyle ; l'acrylonitrile ; les dialkylacrylamides ; l'acide acrylique ; et leurs mélanges.

**5.** Copolymère selon l'une des revendications 1 à 4, caractérisé par le fait que le monomère de réticulation Mr est choisi parmi les polyméthacrylates et polyacrylates de polyols, l'acrylate et le méthacrylate de vinyle, et leurs mélanges.

**6.** Copolymère séquencé selon l'une des revendications 1 à 5, caractérisé par le fait que ses branches (PA-PB-PC) et, le cas échéant, (PD-PE) et son noyau N représentent, pour 100 parties en poids dudit copolymère, respectivement 80 à 98 parties en poids, et 20 à 2 parties en poids.

**7.** Copolymère séquencé selon l'une des revendications 1 à 6, caractérisé par le fait que chacune des séquences comporte une masse moléculaire moyenne en nombre de 1 000 - 500 000.

**8.** Copolymère séquencé selon l'une des revendications 1 à 7, caractérisé par le fait qu'il présente un indice de polydispersité compris entre 1,1 et 2.

**9.** Procédé de fabrication d'un copolymère séquencé en étoile de formule :

$$\left[\begin{array}{c}(PA\text{-}PB\text{-}PC)_n \\ \\ (PD\text{-}PE)_m\end{array}\right] N \qquad (I)$$

dans laquelle :

ou bien :

- PA est éventuellement présent et représente une séquence polymère issue d'au moins un monomère A choisi parmi les monomères vinylaromatiques et méthacryliques;
- PB représente une séquence polymère issue d'au moins un monomère acrylique B ; et
- PC est éventuellement présent, auquel cas il représente une séquence polymère issue d'au moins un monomère C choisi parmi les monomères méthacryliques ;

ou bien :

- PA et PC représentent chacun une séquence polymère issue d'un même monomère acrylique ; et
- PB représente une séquence polymère issue d'au moins un monomère B choisi parmi les monomères méthacryliques ;
- PD représente une séquence polymère issue d'au moins un monomère D choisi parmi les monomères vinylaromatiques et méthacryliques, et simultanément PE représente une séquence polymère issue d'au moins un monomère acrylique E ; ou bien PD représente une séquence polymère issue d'au moins un monomère acrylique D, et simultanément PE représente une séquence polymère issue d'au moins un monomère méthacrylique E ;
- n représente le nombre de branches de (PA-PB-PC) et est compris entre 2 et 20 inclus, et m représente le nombre de branches de (PD-PE) et est compris entre 0 et 18 inclus, à la condition que la somme n+m ne dépasse pas la valeur de 20,
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinylaromatiques et méthacryliques ; et
- N représente un nodule réticulé d'au moins un monomère Mr polymérisé, ledit monomère Mr étant constitué par un agent de réticulation multifonctionnel présentant au moins deux doubles liaisons polymérisables par molécule.

caractérisé par le fait que :

(1) on conduit une polymérisation anionique d'au moins un monomère A, à l'aide d'un système initiateur

constitué par au moins un amorceur monofonctionnel de formule :

$$(R)_p\text{-}M \qquad (II)$$

dans laquelle :

- M désigne un métal alcalin ou alcalino-terreux (valence p de 1 ou 2) ; et
- R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle,

et, le cas échéant, au moins un ligand choisi parmi les sels de métaux alcalins ou alcalino-terreux, les sels organiques de métaux alcalins, et les complexants macrocycliques non azotés, ce qui permet d'obtenir un chaînon vivant de la séquence polymère $PA^-$ ; puis

(2) on fait réagir ledit chaînon vivant ainsi obtenu avec au moins un monomère B, en présence d'au moins un ligand tel que défini ci-dessus, ce qui permet d'obtenir un copolymère biséquencé vivant $(PA\text{-}PB)^-$, puis

(3) on fait réagir ledit copolymère biséquencé vivant ainsi obtenu avec au moins un monomère C, en présence d'au moins un ligand tel que défini ci-dessus, ce qui permet d'obtenir le copolymère triséquencé vivant (PA-PB-PC) ; l'étape (3) pouvant être omise et le procédé pouvant être commencé en conduisant l'étape (1) avec le monomère B, ou bien l'on ne peut former qu'une séquence vivante $PA^-$ ou $PB^-$ ou $PC^-$ ;

(4) le cas échéant, on forme un copolymère biséquencé vivant $(PD\text{-}PE)^-$ en procédant comme en (1) et (2), mais en partant d'au moins un monomère D et d'au moins un monomère E ; ou bien on forme une séquence vivante $PD^-$ ou $PE^-$ en conduisant l'étape (1) avec les monomères D ou E,

(5) on fait réagir le copolymère vivant $(PA\text{-}PB\text{-}PC)^-$ ou $(PA\text{-}PB)^-$ ou $(PB\text{-}PC)^-$ ou la séquence vivante $PA^-$ ou $PB^-$ ou $PC^-$, le cas échéant en mélange avec le copolymère biséquencé vivant $(PD\text{-}PE)^-$ ou la séquence vivante $PD^-$ ou $PE^-$ obtenu selon (4), dans le milieu qui a servi à conduire leur polymérisation par voie anionique, avec au moins un monomère Mr en excès molaire de 4 à 26 par centre actif, et on désactive les doubles liaisons par une réaction avec une source de protons consistant notamment en un alcool, de l'eau ou un acide protonique; et

(6) le cas échéant, on conduit une transestérification en milieu acide du copolymère en étoile obtenu.

**10.** Procédé selon la revendication 9, caractérisé par le fait que dans les étapes de polymérisation, la proportion molaire du ligand vis-à-vis de l'amorceur est au moins égale à 1 et peut aller jusqu'à 50.

**11.** Procédé selon l'une des revendications 9 et 10, caractérisé par le fait qu'on effectue les polymérisations des étapes (1) à (5), à une température se situant entre -78°C et 0°C.

**12.** Procédé selon l'une des revendications 7 à 9, caractérisé par le fait que l'on effectue les polymérisations des étapes (1) à (5) dans au moins un solvant.

**Revendications pour l'Etat contractant suivant : ES**

**1.** Procédé de fabrication d'un copolymère séquencé en étoile de formule :

$$\left[\begin{matrix}(PA\text{-}PB\text{-}PC)_n \\ \\ (PD\text{-}PE)_m\end{matrix}\right] N \qquad (I)$$

dans laquelle :

ou bien :

- PA est éventuellement présent et représente une séquence polymère issue d'au moins un monomère A choisi parmi les monomères vinylaromatiques et méthacryliques;
- PB représente une séquence polymère issue d'au moins un monomère acrylique B ; et
- PC est éventuellement présent, auquel cas il représente une séquence polymère issue d'au moins un monomère C choisi parmi les monomères méthacryliques ;

ou bien :

- PA et PC représentent chacun une séquence polymère issue d'un même monomère acrylique ; et

- PB représente une séquence polymère issue d'au moins un monomère B choisi parmi les monomères méthacryliques ;
- PD représente une séquence polymère issue d'au moins un monomère D choisi parmi les monomères vinylaromatiques et méthacryliques, et simultanément PE représente une séquence polymère issue d'au moins un monomère acrylique E ; ou bien PD représente une séquence polymère issue d'au moins un monomère acrylique D, et simultanément PE représente une séquence polymère issue d'au moins un monomère méthacrylique E ;
- n représente le nombre de branches de (PA-PB-PC) et est compris entre 2 et 20 inclus, et m représente le nombre de branches de (PD-PE) et est compris entre 0 et 18 inclus, à la condition que la somme n+m ne dépasse pas la valeur de 20,
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinylaromatiques et méthacryliques ; et
- N représente un nodule réticulé d'au moins un monomère Mr polymérisé, ledit monomère Mr étant constitué par un agent de réticulation multifonctionnel présentant au moins deux doubles liaisons polymérisables par molécule.

caractérisé par le fait que :

(1) on conduit une polymérisation anionique d'au moins un monomère A, à l'aide d'un système initiateur constitué par au moins un amorceur monofonctionnel de formule :

$$(R)_p\text{-}M \qquad (II)$$

dans laquelle :

- M désigne un métal alcalin ou alcalino-terreux (valence p de 1 ou 2) ; et
- R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle,

et, le cas échéant, au moins un ligand choisi parmi les sels de métaux alcalins ou alcalino-terreux, les sels organiques de métaux alcalins, et les complexants macrocycliques non azotés, ce qui permet d'obtenir un chaînon vivant de la séquence polymère $PA^-$ ; puis

(2) on fait réagir ledit chaînon vivant ainsi obtenu avec au moins un monomère B, en présence d'au moins un ligand tel que défini ci-dessus, ce qui permet d'obtenir un copolymère biséquencé vivant $(PA\text{-}PB)^-$, puis

(3) on fait réagir ledit copolymère biséquencé vivant ainsi obtenu avec au moins un monomère C, en présence d'au moins un ligand tel que défini ci-dessus, ce qui permet d'obtenir le copolymère triséquencé vivant $(PA\text{-}PB\text{-}PC)^-$; l'étape (3) pouvant être omise et le procédé pouvant être commencé en conduisant l'étape (1) avec le monomère B, ou bien l'on ne peut former qu'une séquence vivante $PA^-$ ou $PB^-$ ou $PC^-$ ;

(4) le cas échéant, on forme un copolymère biséquencé vivant $(PD\text{-}PE)^-$ en procédant comme en (1) et (2), mais en partant d'au moins un monomère D et d'au moins un monomère E ; ou bien on forme une séquence vivante $PD^-$ ou $PE^-$ en conduisant l'étape (1) avec les monomères D ou E,

(5) on fait réagir le copolymère vivant $(PA\text{-}PB\text{-}PC)^-$ ou $(PA\text{-}PB)^-$ ou $(PB\text{-}PC)^-$ ou la séquence vivante $PA^-$ ou $PB^-$ ou $PC^-$, le cas échéant en mélange avec le copolymère biséquencé vivant $(PD\text{-}PE)^-$ ou la séquence vivante $PD^-$ ou $PE^-$ obtenu selon (4), dans le milieu qui a servi à conduire leur polymérisation par voie anionique, avec au moins un monomère Mr en excès molaire de 4 à 26 par centre actif, et on désactive les doubles liaisons par une réaction avec une source de protons consistant notamment en un alcool, de l'eau ou un acide protonique; et

(6) le cas échéant, on conduit une transestérification en milieu acide du copolymère en étoile obtenu.

**2.** Procédé selon la revendication 1, caractérisé par le fait que le monomère vinylaromatique de base est choisi parmi le styrène ; les styrènes substitués ; et leurs mélanges.

**3.** Procédé selon l'une des revendications 1 et 2, caractérisé par le fait que le monomère méthacrylique de base est choisi parmi les méthacrylates d'alkyle en $C_1$-$C_{18}$ ; éventuellement substitué par halogène et/ou hydroxyle, le méthacrylate de glycidyle ; le méthacrylate de norbornyle ; le méthacrylate d'isobornyle, le méthacrylonitrile ; les dialkylméthacrylamides ; l'acide méthacrylique ; et leurs mélanges.

**4.** Procédé selon l'une des revendications 1 à 3, caractérisé par le fait que le monomère acrylique de base est choisi parmi les acrylates d'alkyle en $C_1$-$C_{18}$ ; l'acrylate de phényle ; l'acrylate d'isobornyle ; l'acrylate de norbornyle ; les acrylates d'alkylthioalkyle ou d'alcoxyalkyle ; l'acrylonitrile ; les dialkylacrylamides ;

l'acide acrylique ; et leurs mélanges.

5. Procédé selon l'une des revendications 1 à 4, caractérisé par le fait que le monomère de réticulation Mr est choisi parmi les polyméthacrylates et polyacrylates de polyols, l'acrylate et le méthacrylate de vinyle, et leurs mélanges.

6. Procédé selon l'une des revendications 1 à 5, caractérisé par le fait que les branches (PA-PB-PC) et, le cas échéant, (PD-PE) et le noyau N représentent, pour 100 parties en poids dudit copolymère, respectivement 80 à 98 parties en poids, et 20 à 2 parties en poids.

7. Procédé selon l'une des revendications 1 à 6, caractérisé par le fait que chacune des séquences comporte une masse moléculaire moyenne en nombre de 1 000 - 500 000.

8. Procédé selon l'une des revendications 1 à 7, caractérisé par le fait que le copolymère obtenu présente un indice de polydispersité compris entre 1,1 et 2.

9. Procédé selon l'une des revendications 1 à 8, caractérisé par le fait que dans les étapes de polymérisation, la proportion molaire du ligand vis-à-vis de l'amorceur est au moins égale à 1 et peut aller jusqu'à 50.

10. Procédé selon l'une des revendications 1 à 9, caractérisé par le fait qu'on effectue les polymérisations des étapes (1) à (5), à une température se situant entre -78°C et 0°C.

11. Procédé selon l'une des revendications 1 à 10 caractérisé par le fait que l'on effectue les polymérisations des étapes (1) à (5) dans au moins un solvant.

**Claims**

**Claims for the following Contracting States : AT, BE, CH, DE, DK, FR, GB, GR, IT, LI, LU, NL, SE**

1. Star-shaped block copolymers denoted by the general formula (I):

$$\begin{bmatrix} (PA\text{-}PB\text{-}PC)_n \\ (PD\text{-}PE)_m \end{bmatrix} \text{-}N \qquad (I)$$

in which:
either:
- PA denotes a polymer block originating from at least one monomer A chosen from vinylaromatic and methacrylic monomers;
- PB denotes a polymer block originating from at least one acrylic monomer B; and
- PC is optionally present, in which case it denotes a polymer block originating from at least one monomer C chosen from methacrylic monomers;

or:
- each of PA and PC denotes a polymer block originating from the same single acrylic monomer; and
- PB denotes a polymer block originating from at least one monomer B chosen from methacrylic monomers;
- PD denotes a polymer block originating from at least one monomer D chosen from vinylaromatic.and methacrylic monomers, and simultaneously PE denotes a polymer block originating from at least one acrylic monomer E; or else PD denotes a polymer block originating from at least one acrylic monomer D and simultaneously PE denotes a polymer block originating from at least one methacrylic monomer E;
- n denotes the number of branches of (PA-PB-PC) and is between 2 and 20 inclusive, and m denotes the number of branches of (PD-PE) and is between 0 and 18 inclusive, on condition that the sum

n+m does not exceed the value of 20,
- it being furthermore possible for each of the branches (PA-PB-PC) and (PD-PE) to comprise only a single polymer block, in which case the two blocks are different, one being of an acrylic monomer and the other of a monomer chosen from vinylaromatic and methacrylic monomers; and
- N denotes a crosslinked nodule of at least one polymerised monomer Mr, the said monomer Mr consisting of a multifunctional crosslinking agent containing at least two polymerisable double bonds per molecule.

2. Copolymers according to Claim 1, characterised in that the basic vinylaromatic monomer is chosen from styrene, substituted styrenes and their mixtures.

3. Copolymers according to either of Claims 1 and 2, characterised in that the basic methacrylic monomer is chosen from $C_1$-$C_{18}$ alkyl methacrylates, the alkyl group being optionally substituted by halogen and/or hydroxyl, glycidyl methacrylate, norbornyl methacrylate, isobornyl methacrylate, methacrylonitrile, dialkylmethacrylamides, methacrylic acid and their mixtures.

4. Block copolymer according to any one of Claims 1 to 3, characterised in that the basic acrylic monomer is chosen from $C_1$-$C_{18}$ alkyl acrylates, phenyl acrylate, isobornyl acrylate, norbornyl acrylate, alkylthioalkyl or alkoxyalkyl acrylates, acrylonitrile, dialkylacrylamides, acrylic acid and their mixtures.

5. Copolymer according to one of Claims 1 to 4, characterised in that the crosslinking monomer Mr is chosen from polyol polymethacrylates and polyacrylates, vinyl acrylate and methacrylate and their mixtures.

6. Block copolymer according to one of Claims 1 to 5, characterised in that its branches (PA-PB-BC) and, if appropriate, (PD-PE) and its nucleus N represent 80 to 98 parts by weight and 20 to 2 parts' by weight respectively per 100 parts by weight of the said copolymer.

7. Block copolymer according to one of Claims 1 to 6, characterised in that each of the blocks comprises a number-average molecular mass of 1000-500,000.

8. Block copolymer according to one of Claims 1 to 7, characterised in that it exhibits a polydispersity index of between 1.1 and 2.

9. Process for the manufacture of a star-shaped block copolymer of formula:

$$\left[\begin{matrix}(PA\text{-}PB\text{-}PC)_n \\ \\ (PD\text{-}PE)_m\end{matrix}\right] N \qquad (I')$$

in which:
either:
- PA is optionally present and denotes a polymer block originating from at least one monomer A chosen from vinylaromatic and methacrylic monomers;
- PB denotes a polymer block originating from at least one acrylic monomer B; and
- PC is optionally present, in which case it denotes a polymer block originating from at least one monomer C chosen from methacrylic monomers;

or:
- each of PA and PC denotes a polymer block originating from the same single acrylic monomer; and
- PB denotes a polymer block originating from at least one monomer B chosen from methacrylic monomers;
- PD denotes a polymer block originating from at least one monomer D chosen from vinylaromatic and methacrylic monomers, and simultaneously PE denotes a polymer block originating from at least one acrylic monomer E; or else PD denotes a polymer block originating from at least one acrylic monomer D and simultaneously PE denotes a polymer block originating from at least one methacrylic monomer E;

- n denotes the number of branches of (PA-PB-PC) and is between 2 and 20 inclusive, and m denotes the number of branches of (PD-PE) and is between 0 and 18 inclusive, on condition that the sum n+m does not exceed the value of 20,
- it being furthermore possible for each of the branches (PA-PB-PC) and (PD-PE) to comprise only a single polymer block, in which case the two blocks are different, one being of an acrylic monomer and the other of a monomer chosen from vinylaromatic and methacrylic monomers; and
- N denotes a crosslinked nodule of at least one polymerised monomer Mr, the said monomer Mr consisting of a multifunctional crosslinking agent containing at least two polymerisable double bonds per molecule,

characterised in that:

(1) an anionic polymerisation of at least one monomer A is conducted with the aid of an initiating system consisting of at least one monofunctional initiator of formula:

$$(R)_p\text{-}M \qquad (II)$$

in which:

- M denotes an alkali or alkaline-earth metal (valency p of 1 or 2); and
- R denotes a straight- or branched-chain alkyl radical containing 2 to 6 carbon atoms or an optionally substituted aryl radical or an alkyl radical containing 1 to 6 carbon atoms substituted by at least one phenyl group,

and, if appropriate, at least one ligand chosen from the salts of alkali or alkaline-earth metals, organic salts of alkali metals and nonnitrogenous macrocyclic complexants, which makes it possible to obtain a living chain unit of the polymer block $PA^-$; then

(2) the said living chain unit thus obtained is reacted with at least one monomer B in the presence of at least one ligand such as defined above, which makes it possible to obtain a living diblock copolymer $(PA\text{-}PB)^-$, then

(3) the said living diblock copolymer thus obtained is reacted with at least one monomer C in the presence of at least one ligand as defined above, which makes it possible to obtain the living triblock copolymer $(PA\text{-}PB\text{-}PC)^-$; it being possible for stage (3) to be omitted and it being possible for the process to be started by conducting stage (1) with the monomer B, or else only one living block $PA^-$ or $PB^-$ or $PC^-$ may be formed;

(4) if appropriate, a living diblock copolymer $(PD\text{-}PE)^-$ is formed by proceeding as in (1) and (2), but starting with at least one monomer D and at least one monomer E; or else a living block $PD^-$ or $PE^-$ is formed by conducting stage (1) with the monomers D or E,

(5) the living copolymer $(PA\text{-}PB\text{-}PC)^-$ or $(PA\text{-}PB)^-$ or (PB-PC) or the living block $PA^-$ or $PB^-$ or $PC^-$, if appropriate mixed with the living diblock copolymer $(PD\text{-}PE)^-$ or the living block $PD^-$ or $PE^-$ obtained according to (4) is reacted in the medium which has been used for conducting their polymerisation by anionic route, with at least one monomer Mr in a molar excess of 4 to 26 per active centre, and the double bonds are deactivated by a reaction with a source of protons, consisting especially of an alcohol, water or a protonic acid; and

(6) if appropriate, a transesterification of the star-shaped copolymer obtained is conducted in an acidic medium.

**10.** Process according to Claim 9, characterised in that, in the polymerisation stages, the molar proportion of the ligand to the initiator is at least equal to 1 and can range up to 50.

**11.** Process according to either of Claims 9 and 10, characterised in that the polymerisations of stages (1) to (5) are carried out at a temperature which is situated between -78°C and 0°C.

**12.** Process according to one of Claims 7 to 9, characterised in that the polymerisations of stages (1) to (5) are carried out in at least one solvent.

**Claims for the following Contracting State : ES**

**1.** Process for the manufacture of a star-shaped block copolymer of formula :

$$\left[\begin{array}{c}(PA\text{-}PB\text{-}PC)_n \\ \\ (PD\text{-}PE)_m\end{array}\right]\!\!-N \qquad (I)$$

in which :
either :

- PA is optionally present and denotes a polymer block originating from at least one monomer A chosen from vinylaromatic and methacrylic monomers ;
- PB denotes a polymer block originating from at least one acrylic monomer B ; and
- PC is optionally present, in which case it denotes a polymer block originating from at least one monomer C chosen from methacrylic monomers ;

or :

- each of PA and PC denotes a polymer block originating from the same single acrylic monomer ; and
- PB denotes a polymer block originating from at least one monomer B chosen from methacrylic monomers ;
- PD denotes a polymer block originating from at least one monomer D chosen from vinylaromatic and methacrylic monomers, and simultaneously PE denotes a polymer block originating from at least one acrylic monomer E ; or else PD denotes a polymer block originating from at least one acrylic monomer D and simultaneously PE denotes a polymer block originating from at least one methacrylic monomer E ;
- n denotes the number of branches of (PA-PB-PC) and is between 2 and 20 inclusive, and m denotes the number of branches of (PD-PE) and is between 0 and 18 inclusive, on condition that the sum n + m does not exceed the value of 20,
- it being furthermore possible for each of the branches (PA-PB-PC) and (PD-PE) to comprise only a single polymer block, in which case the two blocks are different, one being of an acrylic monomer and the other of a monomer chosen from vinylaromatic and methacrylic monomers ; and
- N denotes a crosslinked nodule of at least one polymerised monomer Mr, the said monomer Mr consisting of a multifunctional crosslinking agent containing at least two polymerisable double bonds per molecule,

characterised in that :

(1) an anionic polymerisation of at least one monomer A is conducted with the aid of an initiating system consisting of at least one monofunctional initiator of formula :

$$(R)_P\text{-}M \qquad (II)$$

in which :

- M denotes an alkali or alkaline-earth metal (valency p of 1 or 2) ; and
- R denotes a straight- or branched-chain alkyl radical containing 2 to 6 carbon atoms or an optionally substituted aryl radical or an alkyl radical containing 1 to 6 carbon atoms substituted by at least one phenyl group,

and, if appropriate, at least one ligand chosen from the salts of alkali or alkaline-earth metals, organic salts of alkali metals and nonnitrogenous macrocyclic complexants, which makes it possible to obtain a living chain unit of the polymer block $PA^-$ ; then

(2) the said living chain unit thus obtained is reacted with at least one monomer B in the presence of at least one ligand such as defined above, which makes it possible to obtain a living diblock copolymer $(PA\text{-}PB)^-$, then

(3) the said living diblock copolymer thus obtained is reacted with at least one monomer C in the presence of at least one ligand as defined above, which makes it possible to obtain the living triblock copolymer $(PA\text{-}PB\text{-}PC)^-$ ; it being possible for stage (3) to be omitted and it being possible for the process to be started by conducting stage (1) with the monomer B, or else only one living block $PA^-$ or $PB^-$ or $PC^-$ may be formed ;

(4) if appropriate, a living diblock copolymer $(PD\text{-}PE)^-$ is formed by proceeding as in (1) and (2), but starting with at least one monomer D and at least one monomer E; or else a living block $PD^-$ or $PE^-$ is formed by conducting stage (1) with the monomers D or E,

(5) the living copolymer $(PA\text{-}PB\text{-}PC)^-$ or $(PA\text{-}PB)^-$ or $(PB\text{-}PC)^-$ or the living block $PA^-$ or $PB^-$ or $PC^-$, if appropriate mixed with the living diblock copolymer $(PD\text{-}PE)^-$ or the living block $PD^-$ or $PE^-$ obtained

according to (4) is reacted in the medium which has been used for conducting their polymerisation by anionic route, with at least one monomer Mr in a molar excess of 4 to 26 per active centre, and the double bonds are deactivated by a reaction with a source of protons, consisting especially of an alcohol, water or a protonic acid ; and
(6) if appropriate, a transesterification of the star-shaped copolymer obtained is conducted in an acidic medium.

**2.** Process according to Claim 1, characterised in that the basic vinylaromatic monomer is chosen from styrene, substituted styrenes and their mixtures.

**3.** Process according to either of Claims 1 and 2, characterised in that the basic methacrylic monomer is chosen from $C_1$-$C_{18}$ alkyl methacrylates, the alkyl group being optionally substituted by halogen and/or hydroxyl, glycidyl methacrylate, norbornyl methacrylate, isobornyl methacrylate, methacrylonitrile, dialkylmethacrylamides, methacrylic acid and their mixtures.

**4.** Process according to any one of Claims 1 to 3, characterised in that the basic acrylic monomer is chosen from $C_1$-$C_{18}$ alkyl acrylates, phenyl acrylate, isobornyl acrylate, norbornyl acrylate, alkylthioalkyl or alkoxyalkyl acrylates, acrylonitrile, dialkylacrylamides, acrylic acid and their mixtures.

**5.** Process according to one of Claims 1 to 4, characterised in that the crosslinking monomer Mr is chosen from polyol polymethacrylates and polyacrylates, vinyl acrylate and methacrylate and their mixtures.

**6.** Process according to one of Claims 1 to 5, characterised in that the branches (PA-PB-BC) and, if appropriate, (PD-PE) and the nucleus N represent 80 to 98 parts by weight and 20 to 2 parts by weight respectively per 100 parts by weight of the said copolymer.

**7.** Process according to one of Claims 1 to 6, characterised in that each of the blocks comprises a number-average molecular mass of 1000 - 500 000.

**8.** Process according to one of Claims 1 to 7, characterised in that the copolymer which is obtained exhibits a polydispersity index of between 1.1 and 2.

**9.** Process according to one of Claims 1 to 8, characterised in that, in the polymerisation stages, the molar proportion of the ligand to the initiator is at least equal to 1 and can range up to 50.

**10.** Process according to one of Claims 1 to 9, characterised in that the polymerisations of stages (1) to (5) are carried out at a temperature which is situated between -78°C and 0°C.

**11.** Process according to one of Claims 1 to 10, characterised in that the polymerisations of stages (1) to (5) are carried out in at least one solvent.

## Patentansprüche

### Patentansprüche für folgende Vertragsstaaten : AT, BE, CH, DE, DK, FR, GB, GR, IT, LI, LU, NL, SE

**1.** Sternblockcopolymer, dargestellt durch die allgemeine Formel (I)

$$\begin{bmatrix} (PA-PB-PC)_n \\ \\ (PD-PE)_m \end{bmatrix} N \qquad (I)$$

in der entweder:
- PA eine Polymersequenz darstellt, die aus mindestens einem Monomer A aus der Gruppe der vinylaromatischen oder methacrylischen Monomere abgeleitet ist;
- PB eine Polymersequenz darstellt, die aus mindestens einem acrylischen Monomer B abgeleitet ist;

und

- PC gegebenenfalls eine Polymersequenz darstellt, die von mindestens einem Monomeren C aus der Gruppe der Methacrylmonomere abgeleitet ist;

oder:

- PA und PC jeweils eine aus einem gleichen Acrylmonomeren abgeleitete Polymeresequenz darstellen; und
- PB eine Polymersequenz darstellt, die aus mindestens einem Monomeren B aus der Gruppe der Methacrylmonomere abgeleitet ist;
- PD eine Polymersequenz darstellt, die aus mindestens einem Monomeren D aus der Gruppe der vinylaromatischen oder methacrylischen Monomere abgeleitet ist und gleichzeitig PE eine Polymersequenz darstellt, die aus mindestens einem Acrylmonomer E abgeleitet ist; oder PD eine Polymersequenz darstellt, die aus mindestens einem Acrylmonomeren D abgeleitet ist und gleichzeitig PE eine Polymersequenz darstellt, die aus mindestens einem Methacrylmonomeren E abgeleitet ist;
- n bezeichnet die Zahl der (PA-PB-PC)-Einheiten und liegt zwischen 2 und einschließlich 20 und m bezeichnet die Zahl der (PD-PE)-Einheiten und liegt zwischen 0 und einschließlich 18, unter der Bedingung, daß die Summe von n und m nicht den Wert von 20 übersteigt,
- jede der (PA-PB-PC)- und (PD-PE)-Einheiten kann außerdem nicht nur aus einer einzigen Polymersequenz bestehen; in dem Fall, in dem die beiden Sequenzen verschieden sind, ist die eine ein Acrylmonomer und die andere ein Monomer aus der Gruppe der vinylaromatischen und methacrylischen Monomere; und
- N eine vernetzte Kugel aus mindestens einem polymerisierten Monomer Mr darstellt, das genannte Monomer Mr wird mittels eines multifunktionnellen Vernetzungsmittels mit mindestens 2 zur Polymerisation geeigneten Doppelbindungen pro Molekül gebildet.

**2.** Copolymer nach Anspruch 1, dadurch gekennzeichnet, daß das vinylaromatische Basismonomer aus der Gruppe von Styren, der substituierten Styrene oder deren Mischungen ist.

**3.** Copolymer nach einem der Ansprüche 1 oder 2, dadurch gekennzeichnet, daß das methacrylische Basismonomer aus der Gruppe von $C_1$-$C_8$-Alkylmethacrylaten, die gegebenenfalls durch ein Halogenatome und/oder eine Hydroxylgruppe substituiert sind, Glycidylmethacrylat, Norbornylmethacrylat, Isonorbornylmethacrylat, Methacrylonitril, Dialkylmethacrylamiden, Methacrylsäure oder ihrer Mischungen ist.

**4.** Blockcopolymer nach einem der Ansprüche 1 bis 3, dadurch gekennzeichnet, daß das Basisacrylmonomer aus der Gruppe von $C_1$-$C_{18}$-Alkylacrylaten, Phenylacrylat, Isobornylacrylat, Norbornylacrylat, Alkylthioalkyl- oder Alkoxyalkylacrylaten, Acrylonitril, Dialkylacrylamiden, Acrylsäure oder ihren Mischungen ist.

**5.** Copolymer nach einem der Ansprüche 1 bis 4, dadurch gekennzeichnet, daß das Vernetzungsmonomer Mr aus der Gruppe von Polymethacrylaten und Polyacrylaten von Polyolen, Vinylacrylat und Vinylmethacrylat, und ihren Mischungen ist.

**6.** Blockcopolymer nach einem der Ansprüche 1 bis 5, dadurch gekennzeichnet, daß ihre (PA-PB-PC)- und gegebenenfalls ihre (PD-PE)-Einheiten und ihr Kern N jeweils 80 bis 98 Gewichtsteile, bzw. 20 bis 2 Gewichtsteile, auf 100 Gewichtsteile des genannten Copolymers bilden.

**7.** Blockcopolymer nach einem der Ansprüche 1 bis 6, dadurch gekennzeichnet, daß jede der Sequenzen eine zahlmittlere Molekularmasse von 1.000 bis 500.000 hat.

**8.** Blockcopolymer nach einem der Ansprüche 1 bis 7, dadurch gekennzeichnet, daß die Polydispersitätszahl zwischen 1,1 und 2 liegt.

**9.** Verfahren zur Herstellung eines Sternblockcopolymeres der Formel

$$\left[\begin{matrix}(PA\text{-}PB\text{-}PC)_n \\ \\ (PD\text{-}PE)_m\end{matrix}\right] N \qquad (I)$$

in der entweder:

- PA gegebenenfalls eine Polymersequenz darstellt, die aus mindestens einem Monomer A aus der Gruppe der vinylaromatischen oder methacrylischen Monomere abgeleitet ist;
- PB eine Polymersequenz darstellt, die aus mindestens einem acrylischen Monomer B abgeleitet ist; und
- PC gegebenenfalls eine Polymersequenz darstellt, die von mindestens einem Monomeren C aus der Gruppe der Methacrylmonomere abgeleitet ist;

oder:

- PA und PC jeweils eine aus einem gleichen Acrylmonomeren abgeleitete Polymeresequenz darstellen; und
- PB eine Polymersequenz darstellt, die aus mindestens einem Monomeren B aus der Gruppe der Methacrylmonomere abgeleitet ist;
- PD eine Polymersequenz darstellt, die aus mindestens einem Monomeren D aus der Gruppe der vinylaromatischen oder methacrylischen Monomere abgeleitet ist und gleichzeitig PE eine Polymersequenz darstellt, die aus mindestens einem Acrylmonomer E abgeleitet ist; oder PD eine Polymersequenz darstellt, die aus mindestens einem Acrylmonomeren D abgeleitet ist und gleichzeitig PE eine Polymersequenz darstellt, die aus mindestens einem Methacrylmonomeren E abgeleitet ist;
- n bezeichnet die Zahl der (PA-PB-PC)-Einheiten und liegt zwischen 2 und einschließlich 20, m bezeichnet die Zahl der (PD-PE)-Einheiten und liegt zwischen 0 und einschließlich 18, unter der Bedingung, daß die Summe von n und m nicht den Wert von 20 übersteigt,
- jede der (PA-PB-PC)- und (PD-PE)-Einheiten kann außerdem nicht nur aus einer einzigen Polymersequenz bestehen; in dem Fall, in dem die beiden Sequenzen verschieden sind, ist die eine ein Acrylmonomer und die andere ein Monomer aus der Gruppe der vinylaromatischen und methacrylischen Monomere; und
- N eine vernetzte Kugel aus mindestens einem polymerisierten Monomer Mr darstellt, das genannte Monomer Mr wird mittels eines multifunktionnellen Vernetzungsmittels mit mindestens 2 zur Polymerisation geeigneten Doppelbindungen pro Molekül gebildet.

gekennzeichnet dadurch, daß:

(1) man eine anionische Polymerisation mit mindestens einem Monomeren A mit Hilfe eines Initiatorsystems durchführt, das aus mindestens einem monofunktionellen Initiators der Formel

$$(R)_p\text{-}M \qquad (II)$$

besteht, in der:

- M ein Alkali- oder Erdalkalimetall bezeichnet (Wert von p ist 1 oder 2); und
- R einen linear oder verzweigten Alkylrest mit 2 bis 6 Kohlenstoffatomen oder einen gegebenenfalls substituierten Arylrest, oder einen Alkylrest mit 1 bis 6 Kohlenstoffatomen, der durch mindestens eine Phenylgruppe substituiert ist

und gegebenenfalls mindestens einen Liganden aus der Gruppe der Alkali- oder Erdalkalimetallsalze, der organischen Alkalimetallsalze und nichstickstoffhaltigen macrocyclische Komplexbildner, die es ermöglichen, ein aktives Kettenlied der Polymersequenz $PA^-$ zu erhalten ; desweiteren,

(2) man das genannte, so erhaltene, lebende Kettenlied mit mindestens einem Monomeren B in Gegenwart von mindestens einem Liganden, der oben definiert wurde, reagieren läßt und so ein aktives bisequenzielles lebendes Copolymer $(PA\text{-}PB)^-$ erhält, desweiteren,

(3) man das genannte, so erhaltene, bisequenzielle lebende Copolymer mit mindestens einem Monomeren C in Gegenwart von mindestens einem Liganden, der oben definiert wurde, reagieren läßt, und ein trisequenzielles, lebendes Copolymer $(PA\text{-}PB\text{-}PC)^-$ erhält; der Schritt (3) kann ausgelassen und das Verfahren begonnen werden, in dem man den Schritt 1 mit dem Monomeren B durchführt oder man kann nur eine lebende Sequenz $PA^-$ oder $PB^-$ oder $PC^-$ bilden;

(4) man gegebenenfalls ein lebendes, bisequenzielles Copolymer $(PD\text{-}PE)^-$ bildet, in dem man wie in Schritt (1) und (2) verfährt, aber mindestens ein Monomer D mit mindestens einem Monomer E zusammenbringt; oder man bildet eine lebende Sequenz $PD^-$ oder $PE^-$ und führt den Schritt (1) mit dem Monomeren D oder E durch,

(5) man das lebende Copolymer $(PA\text{-}PB\text{-}PC)^-$ oder $(PA\text{-}PB)^-$ oder $(PB\text{-}PC)^-$ oder die lebende Sequenz $PA^-$ oder $PB^-$ oder $PC^-$, gegebenenfalls in Mischung mit dem bisequenziellen, lebenden Copolymer $(PD\text{-}PE)^-$ oder der nach Schritt (4) erhaltenen lebenden Sequenz $PD^-$ oder $PE^-$ in dem Medium reagieren läßt, das hat dazu gedient, ihre Polymerisation anionisch durchzuführen mit mindestens einem Monomer Mr in einem molaren Überschuß von 4 bis 26 bezogen auf das aktive Zentrum, und daß man die Doppelbindungen durch Reaktion mit Protonen desaktiviert, die vorzugsweise aus einem Alkohol, aus Wasser oder einer Protonensäure stammen; und

(6) man gegebenenfalls eine Umesterung des erhaltenen Sterncopolymeres in einem sauren Medium durchführt.

**10.** Verfahren nach Anspruch 9, dadurch gekennzeichnet, daß das molare Verhältnis des Liganden zum Initiators während der Polymerisationsschritte mindestens gleich 1 und höchstens bis 50 ist.

**11.** Verfahren nach einem der Ansprüche 9 oder 10, dadurch gekennzeichnet, daß die Polymerisationsschritte (1) bis (5) bei einer Temperatur zwischen -78°C und 0°C durchgeführt werden.

**12.** Verfahren nach einem der Ansprüche 7 bis 9, dadurch gekennzeichnet, daß man die Polymerisationsschritte (1) bis (5) in mindestens einem Lösemittel durchführt.

**Patentansprüche für folgenden Vertragsstaat : ES**

**1.** Verfahren zur Herstellung eines Sternblockcopolymeres dargestellt durch die allgemeine Formel (I)

$$\left[\begin{array}{c}(PA\text{-}PB\text{-}PC)_n \\ \\ (PD\text{-}PE)_m\end{array}\right]N \qquad (I)$$

in der entweder:

- PA gegebenenfalls eine Polymersequenz darstellt, die aus mindestens einem Monomer A aus der Gruppe der vinylaromatischen oder methacrylischen Monomere abgeleitet ist ;
- PB eine Polymersequenz darstellt, die aus mindestens einem acrylischen Monomer B abgeleitet ist; und
- PC gegebenenfalls eine Polymersequenz darstellt, die von mindestens einem Monomeren C aus der Gruppe der Methacrylmonomere abgeleitet ist;

oder:

- PA und PC jeweils eine aus einem gleichen Acrylmonomeren abgeleitete Polymeresequenz darstellen; und
- PB eine Polymersequenz darstellt, die aus mindestens einem Monomeren B aus der Gruppe der Methacrylmonomere abgeleitet ist;
- PD eine Polymersequenz darstellt, die aus mindestens einem Monomeren D aus der Gruppe der vinylaromatischen oder methacrylischen Monomere abgeleitet ist und gleichzeitig PE eine Polymersequenz darstellt, die aus mindestens einem Acrylmonomer E abgeleitet ist; oder PD eine Polymersequenz darstellt, die aus mindestens einem Acrylmonomeren D abgeleitet ist und gleichzeitig PE eine Polymersequenz darstellt, die aus mindestens einem Methacrylmonomeren E abgeleitet ist;
- n bezeichnet die Zahl der (PA-PB-PC)-Einheiten und liegt zwischen 2 und einschließlich 20 und m bezeichnet die Zahl der (PD-PE)-Einheiten und liegt zwischen 0 und einschließlich 18, unter der Bedingung, daß die Summe von n und m nicht den Wert von 20 übersteigt,
- jede der (PA-PB-PC)- und (PD-PE)-Einheiten kann außerdem nicht nur aus einer einzigen Polymersequenz bestehen; in dem Fall, in dem die beiden Sequenzen verschieden sind, ist die eine ein Acrylmonomer und die andere ein Monomer aus der Gruppe der vinylaromatischen und methacrylischen Monomere; und
- N eine vernetzte Kugel aus mindestens einem polymerisierten Monomer Mr darstellt, das genannte Monomer Mr wird mittels eines multifunktionnellen Vernetzungsmittels mit mindestens 2 zur Polymerisation geeigneten Doppelbindungen pro Molekül gebildet.

gekennzeichnet dadurch, daß:

(1) man eine anionische Polymerisation mit mindestens einem Monomeren A mit Hilfe eines Initiatorsystems durchführt, das aus mindestens einem monofunktionellen Initiator der Formel

$$(R)_p\text{-}M \qquad (II)$$

besteht, in der:

- M ein Alkali- oder Erdalkalimetall bezeichnet (Wert von p ist 1 oder 2); und
- R einen linear oder verzweigten Alkylrest mit 2 bis 6 Kohlenstoffatomen oder einen gegebenenfalls substituierten Arylrest, oder einen Alkylrest mit 1 bis 6 Kohlenstoffatomen, der durch mindestens eine Phenylgruppe substituiert ist,

und gegebenenfalls mindestens einen Liganden aus der Gruppe der Alkali- oder Erdalkalimetallsalze, der organischen Alkalimetallsalze und nichstickstoffhaltigen macrocyclische Komplexbildner, die es ermöglichen, ein aktives Kettenlied der Polymersequenz $PA^-$ zu erhalten desweiteren,

(2) man das genannte, so erhaltene, lebende Kettenlied mit mindestens einem Monomeren B in Gegenwart von mindestens einem Liganden der oben definiert wurde, reagieren läßt und so ein aktives bisequenzielles, lebendes Copolymer $(PA\text{-}PB)^-$ erhält, desweiteren,

(3) man das genannte, so erhaltene, lebende bisequenzielle Copolymer mit mindestens einem Monomeren C in Gegenwart von mindestens einem Liganden der oben definiert wurde, reagieren läßt, und ein trisequenzielles, lebendes Copolymer $(PA\text{-}PB\text{-}PC)^-$ erhält; der Schritt (3) kann ausgelassen und das Verfahren begonnen werden, in dem man den Schritt (1) mit dem Monomeren B durchführt oder man kann nur eine lebende Sequenz $PA^-$ oder $PB^-$ oder $PC^-$ bilden;

(4) man gegebenenfalls ein lebendes, bisequenzielles Copolymer $(PD\text{-}PE)^-$ bildet, in dem man wie in Schritt (1) und (2) verfährt, aber mindestens ein Monomer D mit mindestens einem Monomer E zusammenbringt; oder man bildet eine lebende Sequenz $PD^-$ oder $PE^-$ und führt den Schritt (1) mit dem Monomeren D oder E durch,

(5) man das lebende Copolymer $(PA\text{-}PB\text{-}PC)^-$ oder $(PA\text{-}PB)^-$ oder $(PB\text{-}PC)^-$ oder die lebende Sequenz $PA^-$ oder $PB^-$ oder $PC^-$, gegebenenfalls in Mischung mit dem bisequenziellen, lebenden Copolymer $(PD\text{-}PE)^-$ oder der nach Schritt (4) erhaltenen lebenden Sequenz $PD^-$ oder $PE^-$ in dem Medium reagieren läßt, das hat dazu gedient, ihre Polymerisation anionisch durchzuführen mit mindestens einem Monomer Mr in einem molaren Überschuß von 4 bis 26 bezogen auf das aktive Zentrum, und daß man die Doppelbindungen durch Reaktion mit Protonen desaktiviert, die vorzugsweise aus einem Alkohol, aus Wasser oder einer Protonensäure stammen; und

(6) man gegebenenfalls eine Umesterung des erhaltenen Sterncopolymeres in einem sauren Medium durchführt.

2. Verfahren nach Anspruch 1, dadurch gekennzeichnet, daß das vinylaromatische Basismonomer aus der Gruppe von Styren, der substituierten Styrene oder deren Mischungen ist.

3. Verfahren nach einem der Ansprüche 1 oder 2, dadurch gekennzeichnet, daß das methacrylische Basismonomer aus der Gruppe von $C_1$-$C_8$-Alkylmethacrylaten, die gegebenenfalls durch ein Halogenatome und/oder eine Hydroxylgruppe substituiert sind, Glycidylmethacrylat, Norbornylmethacrylat, Isonorbornylmethacrylat, Methacrylonitril, Dialkylmethacrylamiden, Methacrylsäure oder ihrer Mischungen ist.

4. Verfahren nach einem der Ansprüche 1 bis 3, dadurch gekennzeichnet, daß das Basisacrylmonomer aus der Gruppe von $C_1$-$C_{18}$-Alkylacrylaten, Phenylacrylat, Isobornylacrylat, Norbornylacrylat, Alkylthioalkyl- oder Alkoxyalkylacrylaten, Acrylonitril, Dialkylacrylamiden, Acrylsäure oder ihren Mischungen ist.

5. Verfahren nach einem der Ansprüche 1 bis 4, dadurch gekennzeichnet, daß das Vernetzungsmonomer Mr aus der Gruppe von Polymethacrylaten und Polyacrylaten von Polyolen, Vinylacrylat und Vinylmethacrylat, und ihren Mischungen ist.

6. Verfahren nach einem der Ansprüche 1 bis 5, dadurch gekennzeichnet, daß ihre (PA-PB-PC)- und gegebenenfalls ihre (PD-PE)-Einheiten und ihr Kern N jeweils 80 bis 98 Gewichtsteile, bzw. 20 bis 2 Gewichtsteile auf 100 Gewichtsteile, des genannten Copolymers bilden.

7. Verfahren nach einem der Ansprüche 1 bis 6, dadurch gekennzeichnet, daß jede der Sequenzen eine mittlere Molekularmasse von 1.000 bis 500.000 hat.

8. Verfahren nach einem der Ansprüche 1 bis 7, dadurch gekennzeichnet, daß die Polydispersitätszahl zwischen 1,1 und 2 liegt.

**9.** Verfahren nach Anspruch 1 bis 8, dadurch gekennzeichnet, daß das molare Verhältnis des Liganden zum Inhibitor während der Polymerisationsschritte mindestens gleich 1 und höchstens bis 50 ist.

**10.** Verfahren nach einem der Ansprüche 1 oder 9, dadurch gekennzeichnet, daß die Polymerisationsschritte (1) bis (5) bei einer Temperatur zwischen -78°C und 0°C durchgeführt werden.

**11.** Verfahren nach einem der Ansprüche 1 bis 10, dadurch gekennzeichnet, daß man die Polymerisationsschritte (1) bis (5) in mindestens einem Lösemittel durchführt.